(19) **Europäisches Patentamt / European Patent Office / Office européen des brevets**

(11) **EP 2 036 718 A1**

(12) **EUROPEAN PATENT APPLICATION**
published in accordance with Art. 153(4) EPC

(43) Date of publication:
**18.03.2009 Bulletin 2009/12**

(51) Int Cl.:
**B32B 27/32** (2006.01)   **B29C 61/06** (2006.01)
**B32B 27/36** (2006.01)   **B65D 65/40** (2006.01)
**G09F 3/04** (2006.01)

(21) Application number: **07767961.1**

(22) Date of filing: **29.06.2007**

(86) International application number:
**PCT/JP2007/063180**

(87) International publication number:
**WO 2008/001916 (03.01.2008 Gazette 2008/01)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.06.2006   JP 2006182450**
**19.07.2006   JP 2006197397**
**19.07.2006   JP 2006197398**

(71) Applicant: **MITSUBISHI PLASTICS, INC.**
**Tokyo 103-0021 (JP)**

(72) Inventors:
• **HIRUMA, Takashi**
**Nagahama-shi, Shiga 526-8660 (JP)**

• **YAMADA, Takeyoshi**
**Nagahama-shi, Shiga 526-8660 (JP)**
• **TOZAKI, Hiroyuki**
**Nagahama-shi, Shiga 526-8660 (JP)**
• **MIYASHITA, Kazuhisa**
**Nagahama-shi, Shiga 526-8660 (JP)**
• **TAKAGI, Jun**
**Nagahama-shi, Shiga 526-8660 (JP)**

(74) Representative: **Hatt, Anna Louise**
**Beck Greener**
**Fulwood House**
**12 Fulwood Place**
**London WC1V 6HR (GB)**

(54) **HEAT-SHRINKABLE LAMINATED FILM, AND MOLDINGS, HEAT SHRINKABLE LABELS AND CONTAINERS, MADE BY USING THE FILM**

(57)    The present invention provides a heat-shrinkable laminated film having at least three layers including: a (I) layer; and two (II) layers respectively disposed on each surface of the (I) layer, the (I) layer being composed by a layer containing at least one polyolefin series resin as a main component and the (II) layer being composed by a layer containing at least one polylactic acid series resin as a main component, and the storage elastic modulus (E') of the laminated film at 80 °C being 10 MPa or more and 1, 000 MPa or less when dynamic viscoelasticity about a direction orthogonal to the film's main shrinking direction is measured under a condition of vibrational frequency at 10 Hz, strain at 0.1%. The film of the invention exhibits excellent shrink finishing quality, heat-shrinkage property at low temperature, and small natural shrinkage; thereby suitably used for shrinkable packing, shrinkable banding packing, shrinkable label and the like.

Fig. 1

EP 2 036 718 A1

**Description**

Technical Field

The present invention relates to a heat-shrinkable laminated film made from polyolefin series resin and polylactic acid series resin, molded product and heat-shrinkable label employing the film, and a container. More specifically, the present invention relates to a heat-shrinkable laminated film, which exhibits excellent shrink finishing quality, shrinkage property at low temperature, and small natural shrinkage, and which is applicable to shrinkable packing, shrinkable banding packing, shrinkable label and the like. The present invention also relates to a heat-shrinkable laminated film which exhibits excellent heat shrinkage property, transparency, shrink finishing quality, and into which recyclable resin obtained from trimming loss like ends of films and the like can be added (hereinafter, refer to as "addition of a reclamation material"), and suitably used for shrinkable packing, shrinkable banding packing, shrinkable label, and so on. The invention further relates to a molded product and a heat-shrinkable label respectively employing the heat-shrinkable laminated film of the invention, and a container on the outer surface of which the molded product or the heat-shrinkable label is fitted.

Background Art

At present, soft drinks such as juices, or alcoholic beverages such as beer are sold in a form that the drink is filled in containers such as glass bottles or PET (polyethylene terephthalate) bottles. When the drinks are on sale, in order to differentiate the product from other products and to improve its visibility to enhance its commercial value, a heat-shrinkable label where printing is given thereon is often provided around the outer surface of each container.
Examples of the material for the heat-shrinkable label normally include: polyvinyl chloride, polyester, polystyrene, and polyolefin.

Polyolefin series resin is a preferable material, in other words, a material of low environmental burden, because it causes relatively few problems with regard to combustion product gas and endocrine-disrupting chemicals, that is the so-called "environmental hormone", and because it is a material of small density which leads to reduction of weight of trash. However, in the heat-shrinkable filmmade from the polyolefin series resin, film's stiffness and shrinkage property at low temperature, shrinkage at a time of heat shrinkage are not sufficient, and natural shrinkage tends to occur (temperature slightly higher than room temperature, e.g., a film in summer season slightly shrinks before the actual use), which are problematic.

On the other hand, polyester series heat-shrinkable film has rigidity at room temperature (stiffness at ordinary temperatures), shrinkage property at low temperature, and favorable natural shrinkage so that it is suitably employed as heat-shrinkable label. However, compared with polyvinyl chloride series heat-shrinkable film, the polyester series heat-shrinkable film tends to cause uneven shrinkage and wrinkles at a time of heat shrinkage, which are problematic. As one of the polyester series heat-shrinkable films, there is a heat-shrinkable film which uses a polylactic acid series resin; in order to improve the above problems, an example adjusting copolymerization ratio (between L-lactic acid and D-lactic acid) of the polylactic acid series resin has been reported (for example, see Patent document 1.). Nevertheless, by this means, a problem in crystallization of the film at a time of heating is improved to some extent, due to the extreme shrinkage, spots, wrinkles, and pocks tend to be generated. Thus, the above problems have still been unresolved.

In the same manner as above, an attempt to improve shrink finishing quality by adjusting the degree of crystallization of polylactic acid series resin and further blending aliphatic polyester series resin is disclosed (See Patent document 1.). However, compared with polyvinyl chloride series heat-shrinkable film, the shrink finishing quality is far from sufficient.

By the way, a shrinkable sheet having a layer containing polyolefin series resin as a main component and a layer containing polylactic acid as a main component is reported (See Patent document 2.). However, the sheet is aimed at making a film for shrinkable packing to be used for lunch boxes and prepared food sold in convenient stores and the like, and shrinkable sheet forming is attempted by inflation method. Therefore, when used as a label for bottles, which requires high shrinkage at low temperature, sufficient shrinkage property at low temperature cannot be obtained. Further, a sheet having a polyolefin layer as an outer layer is proposed, but cylindrically sealed bag-making is difficult with this sheet.

Still further, a laminated film including a polylactic acid series resin with polyolefin resin or ethylene-vinyl acetate copolymer is reported (See Patent documents 3, 4.). Nevertheless, the invention is the one in which ethylene-vinyl acetate copolymer is introduced as film's surface and backside layers for giving heat sealability to the film; thereby the effects which is the object of the present invention (namely, shrink finishing quality, transparency, solvent sealability, and so on) cannot be obtained.

To the above problems, a laminated heat-shrinkable film including a polyolefin resin as a core layer and polyester series resin is provided on both sides of the core layer through adhesive resin layers is reported (See Patent document 5.). However, since the heat-shrinkable film shows poor compatibility between the polyolefin resin as a core layer and the polyester series resin provided on both sides thereof, when addition of a reclamation material is carried out, transparency of the whole film is significantly damaged, which is problematic.

Patent Document 1: Japanese Patent Application Laid-Open (JP-A) No. 2003-119367

Patent Document 2: Japanese Patent Application Laid-Open (JP-A) No. 2002-019053

Patent Document 3: Japanese Patent Application Laid-Open (JP-A) No. 2000-108202

Patent Document 4: Japanese Patent Application Laid-Open (JP-A) No. 2004-262029

Patent Document 5: Japanese Patent Application Laid-Open (JP-A) No. 2002-347184

Disclosure of the Invention

Problems to be solved by the Invention

Accordingly, an object of the present invention is to provide a heat-shrinkable laminated film which exhibits excellent shrink finishing quality, shrinkage property at low temperature, and small natural shrinkage, and which is suitably employed for shrinkable packing, shrinkable banding packing, shrinkable label, and so on. Another object of the invention is to provide a heat-shrinkable laminated film, which exhibits excellent heat-shrinkage property, transparency, and shrink finishing quality, in which addition of a reclamation material can be carried out, and which is suitably employed for shrinkable packing, shrinkable banding packing, shrinkable label, and so on.
Still another object of the present invention is to provide a molded product and a heat-shrinkable label employing the above film suitably used for shrinkable packing, shrinkable banding packing, shrinkable label, and so on, and a container on the outer surface of which the molded product or the heat-shrinkable label is fitted.

Means for Solving the Problems

The present inventors seriously studied about each composition of the (II) layer (surface and backside layers), (I) layer (middle layer), as well as the (III) layer (adhesive layer) for forming the laminated film of the invention. As a result, the inventors had been succeeded to obtain a laminated film of the present invention which is capable of solving the problems of the above-described related arts.
The first aspect of the present invention is a heat-shrinkable laminated film having at least three layers comprising: a (I) layer; and two (II) layers respectively disposed on each surface of the (I) layer, the storage elastic modulus (E') of the laminated film at 80 °C being 10 MPa or more and 1, 000 MPa or less when dynamic viscoelasticity about a direction orthogonal to the film's main shrinking direction is measured under a condition of vibrational frequency at 10 Hz, strain at 0.1%.

(I) layer: a layer containing at least one polyolefin series resin as a main component;
(II) layer: a layer containing at least one polylactic acid series resin as a main component.

In the first aspect of the invention, heat shrinkage ratio about the main shrinking direction is preferably 20% or more when dipped in hot water at 80°C for 10 seconds.
In the first aspect of the invention, the polylactic acid series resin is preferably a copolymer of D-lactic acid and L-lactic acid. Moreover, composition between D-lactic acid and L-lactic acid of the polylactic acid series resin is preferably: D-lactic acid/L-lactic acid = 3/97-15/85 or 85/15-97/3.
In the first aspect of the invention, at least one or more crystal melting peaks preferably exist within the range of 80 °C or more and 160 °C or less when the polyolefin series resin is measured by differential scanning calorimeter (DSC).
In the first aspect of the invention, the polyolefin series resin is preferably a polyethylene series resin, a polypropylene series resin, an ethylene-vinyl acetate copolymer, or a mixture thereof (polyolefin series resin of the first mode) .
In the first aspect of the invention, the polyolefin series resin is preferably a polypropylene series resin whose melting point is 90 °C or more and 130 °C or less and content ratio of the propylene monomer unit is 80 mass % or more and 99 mass % or less (polyolefin series resin of the second mode).
In the first aspect of the invention, the polyolefin series resin is preferably a polyolefin series resin which contains ethylene-vinyl acetate copolymer as a main component and also contains polypropylene series resin (polyolefin series resin of the third mode).
In the polyolefin series resin of the third mode, content ratio of vinyl acetate monomer unit in the ethylene-vinyl acetate copolymer is preferably 5 mass % or more and 30 mass % or less.

In the polyolefin series resin of the third mode, mass ratio between the ethylene-vinyl acetate copolymer and the polypropylene series resin is preferably:

ethylene-vinyl acetate copolymer/polypropylene series resin = 40/60-95/5.

In the polyolefin series resin of the third mode, mass ratio between the ethylene-vinyl acetate copolymer and the polypropylene series resin is preferably:

ethylene-vinyl acetate copolymer/polypropylene series resin = 60/40-85/15.

In the first aspect of the invention using the polyolefin series resin of the third mode, average of heat shrinkage ratio about the direction orthogonal to the main shrinking direction is preferably within $\pm$ 5% when dipping respectively in hot water at 60 °C and hot water at 90 °C for 10 seconds.

In the first aspect of the invention, the (I) layer can further contains at least one polylactic acid series resin. Moreover, the (I) layer preferably contains 100 parts by mass or less of polylactic acid series resin to 100 parts by mass of polyolefin series resin.

In the first aspect of the invention, resin composing the main component of the (I) layer may be polyolefin series resin of the second mode; in the case where the (I) layer further contains at least one polylactic acid series resin, the content thereof is preferably 3 parts by mass or more and 30 parts by mass or less of polylactic acid series resin to 100 parts by mass of the polypropylene series resin of the (I) layer.

In the first aspect of the invention, a monolayer (III) containing at least adhesive resin as a main component may be provided between the (I) layer and the (II) layer.

In the first aspect of the invention, in case where polyolefin series resins of the second and third modes are used, haze value in accordance with JIS K7105 can be 10% or less.

In the first aspect of the invention, in case where polyolefin series resins of the second and third modes are used, tensile rupture elongation about the direction orthogonal to the main shrinking direction can be 100% or more and 500% or less when measured under a condition of ambient temperature at 0 °C, tensile speed at 100mm/min.

The second aspect of the present invention is a molded product employing the heat-shrinkable laminated film of the first aspect of the invention as a base material.

The third aspect of the present invention is a heat-shrinkable label employing the heat-shrinkable laminated film of the first aspect of the invention as a base material.

The fourth aspect of the present invention is a container, on the outer surface of which the molded product of the second aspect of the invention or the heat-shrinkable label of the third aspect of the invention is fitted.


Effects of the Invention


Since the heat-shrinkable laminated film of the first aspect of the present invention includes the (II) layers (as the surface and backside layers) which are composed by a polylactic acid series resin and the (I) layer (as the middle layer) which is composed by a polyolefin series resin, according to the invention, it is possible to obtain a heat-shrinkable laminated film which can exhibit excellent shrink finishing quality, shrinkage property at low temperature, and small natural shrinkage, these of which could not be obtained from the heat-shrinkable film including the polylactic acid series resin alone or the polyolefin series resin alone; thereby the film can be suitably employed for shrinkable packing, shrinkable banding packing, shrinkable label, and so on.

In addition, as the polyolefin series resin, in case where polyolefin series resin of the second mode and the third mode, it is also possible to obtain the heat-shrinkable laminated film which exhibits excellent heat-shrinkage property, shrink finishing quality, and maintains favorable transparency even in the case where addition of a reclamation material is carried out therein, and which is suitably employed for shrinkable packing, shrinkable banding packing, shrinkable label and so on.

Further, as molded product and heat-shrinkable label of the present invention is formed by the heat-shrinkable laminated film of the invention, according to the invention, it is possible to provide a molded product and a heat-shrinkable label which exhibit favorable shrink finishing quality and shrinkage property at low temperature. Still further, because the container of the invention is fitted with the molded product or the heat-shrinkable label thereon, according to the invention, it can be possible to provide a container having pleasing appearance.


Brief Description of the Drawings


Fig. 1 is a cross sectional view schematically showing a mode about the lamination structure of the of the heat-shrinkable laminated film of the present invention; and

Fig. 2 is a cross sectional view schematically showing another mode about the lamination structure of the heat-shrinkable laminated film of the invention.

Description of the Reference Numerals

| | |
|---|---|
| 10, 20 | heat-shrinkable laminated film |
| 11 | (I) layer |
| 12a, 12b | (II) layer |
| 23a, 23b | (III) layer |

Best Mode for Carrying Out the Invention

Hereinafter, a heat-shrinkable laminated film, a molded product, a heat-shrinkable label of the present invention, as well as a container to which the molded product and the label are fitted (hereinafter, refer to as "film of the invention", "molded product of the invention", "label of the invention", and "containers of the invention".) will be described in detail.

In the description, it should be noted that "as the main component" means an intention that allows to contain another component in the range without preventing the effect of resins forming individual layers. This term does not particularly limit the content ratio. Content ratio of the main component is 50 mass % or more to total mass of the components of each layer, it is preferably 70 mass % or more, further preferably 80 mass % or more, still further preferably 90 mass % or more and 100 mass % or less.

In addition, in the description, the term "film" means a thin and flat product whose thickness is extremely thin compared with its length and width and whose maximum thickness is optionally limited. The film is normally the one provided in a form of roll (Japanese Industrial Standards: JIS K6900); a "sheet" means, in the definition according to Japanese Industrial Standards (JIS), a flat product, the thickness of which is normally relatively small compared with the length and width of the product. However, border between sheet and film is not certain and there is no need to distinguish between them in the language of the present invention. Therefore, in the invention, when a product is called a "film", the film may also include a "sheet".

In the description, "main shrinking direction" means a direction of higher heat shrinkage ratio in the film's longitudinal direction or crosswise direction (width direction). For example, when the film is fitted onto the outer surface of a bottle, it is a direction equivalent to outer circumferential direction of the bottle. In addition, "orthogonal direction" means a direction orthogonal to the main shrinking direction.

[Heat-shrinkable laminated film]

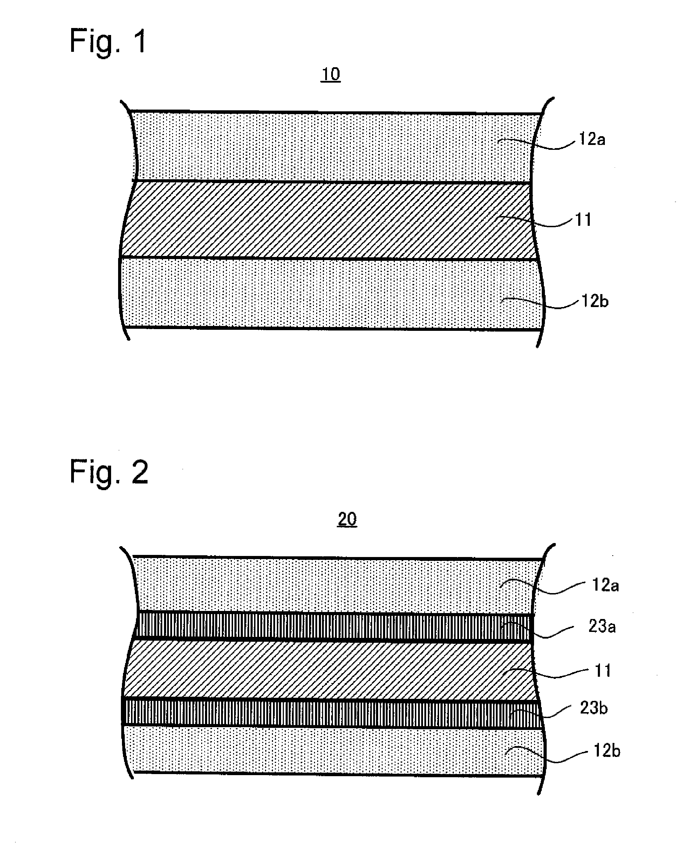

The first mode of the present invention, as shown in Fig. 1, is a laminated film 10 having at least three layers including: a (I) layer 11 containing at least one polyolefin series resin as a main component; and (II) layers 12a, 12b, each of which is formed on respective surface of the (I) layer and contains at least one polylactic acid series resin as a main component.

<(II) layer ( surface layer and backside layer)>

About the film 10 of the invention, the (II) layers 12a, 12b are films to function as a surface layer and a backside layer and are formed by a composition containing at least one polylactic acid series resin (hereinafter, it may be abbreviated as "PLA".) as a main component. Since the (II) layers 12a, 12b are formed by a composition containing at least one polylactic acid series resin as a main component, the film 10 of the invention has the following advantages. First of all, it is possible to obtain a superior stiffness and shrinkage property at low temperature to those of a heat-shrinkable film, the surface and backside layers of which are respectively formed by a polyethylene terephthalate (PET) series resin or a polystyrene series resin. Secondly, compared with a heat-shrinkable film, the surface and backside layers of which are respectively formed by a polyolefin series resin, as it is possible to obtain favorable ink adhesiveness at a time of printing, corona discharge treatment and so on given after film-forming can be omitted; thereby it becomes possible to simplify the manufacturing process. Thirdly, the film 10 of the invention exhibits favorable sealability with solvent like THF at a time of bag-making, so that allows eliminating the use of adhesive when sealing. Hence, it is possible to reduce manufacturing cost.

The polylactic acid series resin usable for the (II) layers may be homopolymer of D-lactic acid or L-lactic acid, or copolymer of these two, mixture thereof may be contained. More specifically, poly (D-lactic acid) having D-lactic acid as the structural unit, poly (L-lactic acid) having L-lactic acid as the structural unit, poly (DL-lactic acid) as a copolymer of L-lactic acid and D-lactic acid, or mixture thereof.

When PLA used in the invention is a copolymer of D-lactic acid and L-lactic acid, or a mixture of homopolymer of D-lactic acid and homopolymer of L-lactic acid, ratio of D-lactic acid and L-lactic acid is: preferably D-lactic acid/L-lactic acid = 99.8/0.2-75/25 or D-lactic acid/L-lacticacid= 0.2/99.8-25/75; more preferably D-lactic acid/L-lactic acid = 99.5/0.5-80/20 or D-lactic acid/L-lactic acid = 0.5/99.5-20/80.

PLA consisted of homopolymer of D-lactic acid or L-lactic acid shows extremely high crystallinity, high melting point, and tends to exhibit excellent thermal resistance and mechanical property. However, when it is used as a heat-shrinkable film, the film is normally exposed by bag-making step provided with printing and solvent. In order to improve printability and solvent sealability of the film, crystallinity of the constituent material itself must be adequately lowered. On the other hand, when the crystallinity is overly high, oriented crystallization is developed at a time of elongation; thereby the shrinkage property tends to be lowered. Accordingly, ratio of D-lactic acid and L-lactic acid of PLA used in the invention is: further preferably D-lactic acid/L-lactic acid = 99/1-85/15, or D-lactic acid/L-lactic acid = 1/99-15/85; still further preferably D-lactic acid/L-lactic acid = 97/3-85/15, or D-lactic acid/L-lactic acid = 3/97-15/85.

In the present invention, copolymers, these of which copolymerization ratio of D-lactic acid and L-lactic acid are different, may be blended for the use as PLA. In such a case, copolymerization ratio of D-lactic acid and L-lactic acid may be adjusted so as the average of copolymerization ratio of D-lactic acid and L-lactic acid in a plurality of lactic acid series polymer to be within the above scope. Depending on the application, by mixing two or more kinds of PLAs those of which copolymerization ratio of D-lactic acid and L-lactic acid are different and by adjusting the crystallinity, thermal resistance and heat-shrinkage property of the mixed PLA can be balanced.

Moreover, the PLA used for the (II) layer may be a copolymer of lactic acid (D-lactic acid, L-lactic acid) with $\alpha$-hydroxy carboxylic acid, aliphatic diol, or aliphatic dicarboxylic acid. Here, the examples of "$\alpha$-hydroxy carboxylic acid" being copolymerized to be the PLA include: bifunctionalized aliphatic hydroxy carboxylic acid such as optical isomers of lactic acid (D-lactic acid to the L-lactic acid; L-lactic acid to the D-lactic acid), glycolic acid, 3-hydroxy butyric acid, 4-hydroxy butyric acid, 2-hydroxy-n-butyric acid, 2-hydroxy-3,3-dimethyl butyric acid, 2-hydroxy-3-methyl butyric acid, 2-methyl butyric acid, 2-hydroxy caprolactone acid; and lactones such as caprolactone, butyl lactone, and valerolactone. Also, examples of "aliphatic diol" being copolymerized to be the PLA include ethylene glycol, 1,4-butanediol, 1,4-cyclohexane dimethanol. While, examples of "aliphatic dicarboxylic acid" to be copolymerized include succinic acid, adipic acid, suberic acid, sebacic acid, and dodecanedioic acid.

The copolymerization ratio of lactic acid with $\alpha$-hydroxy carboxylic acid, aliphatic diol, or aliphatic dicarboxylic acid is:

preferably (lactic acid):($\alpha$-hydroxycarboxylic acid, aliphatic diol, or aliphatic dicarboxylic acid) = 90:10-10:90, more preferably, 80:20-20:80, further preferably 30:70-70:30. When the copolymerization ratio is within the above scope, it is possible to obtain a film which exhibits favorable balance in physicality among stiffness, transparency, impact-resistance, and so on.

The above PLA can be produced by using any kind of known methods like condensation polymerization method and ring-opening polymerization method. For example, in condensation polymerization method, by carrying out direct dehydration condensation polymerization of D-lactic acid, L-lactic acid, or mixture thereof, it is possible to obtain a PLA having an optional composition. Further, in ring-opening polymerization method, by making lactide (which is a cyclic dimer of lactic acid) react by using polymerization adjuster as required in the presence of predetermined catalyst; it is capable of obtaining a PLA series resin having an optional composition. Among the above lactide, there may be DL-lactide which is a dimer of L-lactic acid, by mixing these and copolymerizing as required, it is possible to obtain a PLA having optional composition and crystallinity. Still further, in order to increase molecular mass, small amount of chain extender such as diisocyanate compound, diepoxy compound, acid anhydride, and acid chloride may be used.

The weight (mass) average molecular weight of PLA used for the above (II) layer is 20, 000 or more, preferably 40, 000 or more, more preferably 60,000 or more; the upper limit is 400, 000 or less, preferably 350,000 or less, and further preferably 300, 000 or less. When the weight (mass) average molecular weight is 20,000 or more, adequate resin coagulation force can be obtained, thereby it is capable of preventing defection of film' s strength of elongation and embrittlement. Meanwhile, when the weight (mass) average molecular weight is 400,000 or less, melting viscosity can be lowered, so the range is preferable in view of manufacturing and improvement of productivity.

Examples of commercially available products of the above PLA include "Nature Works" (manufactured by Nature Works LLC) and "LACEA" (manufactured by Mitsui Chemicals, Inc.).

In addition, in order to improve the impact-resistance of the film, rubber component other than PLA is preferably added to the above (II) layer within the range which does not undermine the shrinkage property and film's stiffness (rigidity). The rubber component is not specifically limited to; aliphatic polyester and aromatic-aliphatic polyester other than PLA, copolymer/core-shell structured rubber of diol and dicarboxylic acid with PLA; ethylene-vinyl acetate copolymer (EVA), ethylene-acrylic acid copolymer (EAA); ethylene-ethyl acrylate copolymer (EEA), ethylene- (meth) acrylic acid copolymer (EMAA), and ethylene-methyl (meth) acrylic acid copolymer (EMMA), can be suitably used.

In case where aliphatic polyester other than PLA is used as a rubber component, examples of the aliphatic polyester may include polyhydroxy carboxylic acid, aliphatic polyester obtained by condensation of aliphatic diol and aliphatic dicarboxylic acid, aliphatic polyester obtained by ring-opening polymerization of cyclic lactones, and synthetic aliphatic polyester. Examples of hydroxy carboxylic acid as a structural unit of the above polyhydroxy carboxylic acid include: homopolymer or copolymer of hydroxy carboxylic acid such a: 3-hydroxy butyric acid, 4-hydroxy butyric acid, 2-hydroxy-n-butyric acid, 2-hydroxy-3,3-dimethyl butyric acid, 2-hydroxy-3-methyl butyric acid, 2-methyl lactic acid, and 2-hydroxy caprolactone acid.

Examples of the aliphatic polyester obtained by condensation of aliphatic diol and aliphatic dicarboxylic acid may be: a polymer obtainable by condensation of one or a combination of two or more kinds of aliphatic diol and aliphatic dicarboxylic acid each of which is selected from the below-described group; or a polymer as a desired high molecule compound obtainable by raising the molecular mass with isocyanate as required. As the aliphatic diol, there may be ethylene glycol, propylene glycol, 1,4-butanediol, and 1,4-cyclohexane dimethanol; as aliphatic dicarboxylic acid, there may be succinic acid, adipic acid, suberic acid, sebacic acid, and dodecanedioate.

Further, examples of aliphatic polyester obtained by ring-opening condensation of cyclic lactones include:

ε-caprolactone and σ-valerolactone as a cyclic monomer; and
ring-opened polymer like β-methyl-σ-valerolactone. The cyclic monomer is not only single kind, but also plural kind of cyclic monomers can be selected for copolymerization.

Still further, as for synthetic aliphatic polyester, there may be a copolymer of cyclic acid anhydride and oxiranes; for example, copolymer of succinic anhydride and ethylene oxide, or copolymer of succinic anhydride and propion oxide.

Typical aliphatic polyester other than PLA may be "Bionole" (manufactured by Showa Highpolymer Co., Ltd.) obtained by polymerizing succinic acid and 1,4-butanediol with adipic acid; this can be commercially available. As the aliphatic polyester obtained by ring-opening polymerization of ε-caprolactone, for example, "CELGREEN" manufactured by Daicel Chemical Industries, Ltd. is commercially available.

Next, when aromatic-aliphatic polyester is used as a rubber component, the aromatic-aliphatic polyester may be one whose crystallinity is lowered by introducing aromatic ring between aliphatic chains. The aromatic-aliphatic polyester can be obtained by e.g. condensation of aromatic dicarboxylic acid, aliphatic dicarboxylic acid, and aliphatic diol.

Examples of the above aromatic dicarboxylic acid include isophthalic acid, terephthalic acid, and 2,6-naphthalene dicarboxylic acid; among them, terephthalic acid is most preferably used. Also, examples of aliphatic dicarboxylic acid include succinic acid, adipic acid, suberic acid, sebacic acid, and dodecanedioate; among them, adipic acid is most preferably used. Each of aromatic-dicarboxylic acid, aliphatic dicarboxylic acid, or aliphatic diol may be in combination of two or more kinds thereof.

Typical examples of aromatic-aliphatic polyester include copolymer of tetramethylene adipate with terephthalate, and copolymer of polybutylene adipate with terephthalate. As the copolymer of tetramethylene adipate with terephthalate, "Easter Bio" (manufactured by Eastman Chemical Company) can be commercially available; as the copolymer of polybutylene adipate with terephthalate, "Ecoflex" (manufactured by BASF CORPORATION) can be commercially available.

When copolymer of PLA, diol, and dicarboxylic acid is used as a rubber component, the structure may be any one of random copolymer, block copolymer, and graft copolymer. In view of film's impact resistance and transparency, block copolymer or graft copolymer is preferable. Specific example of the random copolymer is "GS-Pla" (manufactured by Mitsubishi Chemical Corporation); specific example of block copolymer or graft copolymer is "PLAMATE" (manufactured by DIC Corporation.).

Production method of copolymer of PLA, diol, and dicarboxylic acid is not specifically limited to; a method of ring-opening polymerization or ester exchange reaction of lactide with polyester or polyether polyol, these of which have a structure formed by dehydration condensation of diol and dicarboxylic acid. It may also be a method of dehydration/ deglycol condensation or ester exchange reaction of polylactic acid series resin with polyester or polyether polyol, these of which have a structure formed by dehydration condensation of diol and dicarboxylic acid.

Molecular mass of the copolymer of PLA, diol, and dicarboxylic acid can be adjusted to predetermined molecular mass by using isocyanate compound and carboxylic anhydride. In view of workability and mechanical properties, weight (mass) average molecular weight is desirably 50,000 or more, preferably 100,000 or more, and 300,000 or less, preferably 250,000 or less.

When a rubber of core-shell structure is used as the rubber component, as the examples of rubber of core-shell structure: diene series core-shell-type polymer such as (meth) acrylic acid-butadiene copolymer and acrylonitrile-butadiene-styrene copolymer; acrylic core-shell-type polymer such as (meth) acrylic acid-styrene-acrylonitrile copolymer; silicone series core-shell-type copolymer such as silicone-(meth) acrylic acid-methyl (meth) acrylic acid copolymer and silicone-(meth) acrylic acid-acrylonitrile-styrene copolymer, may be used.

Among them, in view of favorable compatibility with polylactic acid series resin, silicone-(meth) acrylic acid-methyl (meth) acrylic acid copolymer, which can have a balance between film's impact resistance and transparency, is more suitably used.

In particular, "METABLEN" (manufactured by Mitsubishi Rayon Co., Ltd.), "Kane Ace" (manufactured by Kaneka Corporation), and so on are commercially available.

When the (II) layer contains the above rubber component, the additive amount, to 100 parts by mass of PLA series resin contained as a main component of the (II) layer, is 100 parts by mass or less, preferably 80 parts by mass or less, further preferably 70 parts by mass or less. If the additive amount of the rubber component is 100 parts by mass or less, film's stiffness and transparency are not damaged, whereby the (II) layer is suitably used as a heat-shrinkable label and the lower limit of the rubber component is not specifically limited to.

Nevertheless, the lower limit is preferably 10 parts by mass or more, more preferably 15 parts by mass or more, in view of giving favorable impact resistance to the film.

<(I) layer (middle layer)>

In the film 10 of the present invention, the (I) layer 11 is a layer functioning as a middle layer and a layer containing a composition having at least one of polyolefin series resin as a main component.

(Polyolefin series resin of the first mode)

Polyolefin series resin used for the (I) layer 11 of the film 10 of the present invention is not particularly limited to; the examples include polyethylene series resin, polypropylene series resin, and ethylene-vinyl acetate copolymer (polyolefin series resin of the first mode). Among them, in view of heat shrinkage ratio and formability, a mixture of polyethylene series resin and polypropylene series resin is preferably used. Polyethylene series resin, polypropylene series resin, and ethylene-vinyl acetate copolymer respectively exist in various forms depending on polymerization method and copolymerization method so that the scope thereof is not specifically limited to. Particularly preferably kinds are shown as below.

Moreover, about polyolefin series resin to be used for the (I) layer 11 of the film 10 of the invention, when measured by differential scanning calorimeter (DSC), it is desirable to have at least one or more of crystal melting peaks within the temperature range of 80 °C or more and 160 °C or less, preferably 85 °C or more and 150 °C or less, further preferably 90 °C or more and 140 °C or less.

In case where at least one or more crystal melting peaks exist at 80 °C or more, film's stiffness at a time of label-fitting within the operating temperature range (about 70 °C or more and 90 °C or less) can be maintained. This can inhibit wrinkles and longitudinal sink marks (a phenomenon where a film shrinks in the main shrinking direction and the orthogonal direction; since the phenomenon causes a shrinkage defect, it is not preferable.) tend to be caused by film's "sink-down" when shrinking, thus it is preferable. On the other hand, when the crystal melting peak of the olefin series resin is determined within the range of 160 °C or less, elongation property at low temperature can be maintained, and heat shrinkage ratio within the operating temperature range can be sufficiently obtained; thus it is preferable.

Examples of polyethylene series resin used for the invention include: high-density polyethylene resin (HDPE) whose density is normally 0.94 $g/cm^3$ or more and 0.97 $g/cm^3$ or less; medium-density polyethylene resin (MDPE) whose density is 0.92 $g/cm^3$ or more and 0.94 $g/cm^3$ or less; low-density polyethylene resin (LDPE) whose density is below 0.92 $g/cm^3$; and linear low-density polyethylene (LLDPE). Among them, from the view point of elongation property, film's impact resistance, transparency, and so on, linear low-density polyethylene (LLDPE) is particularly suitably used.

As the above linear low-density polyethylene (LLDPE) , copolymer of ethylene with $C_{3-20}$ $\alpha$-olefin, preferably $C_{4-12}$ $\alpha$-olefin may be used. Examples of $\alpha$-olefin include propylene, 1-butene, 1-pentene, 1-hexene, 1-heptene, 1-octene, 1-nonene, 1-decene, 3-methyl-1-butene, and 4-methyl-1-pentene. Among them, 1-butene, 1-hexene, and 1-octene are suitably used. In addition, $\alpha$-olefin to be copolymerized may be used alone, or in combination of two or more thereof.

Further, density of the above polyethylene series resin is: preferably 0.890 $g/cm^3$ or more, more preferably 0.895 $g/cm^3$ or more, further preferably 0.900 $g/cm^3$ or more; the upper limit of the density is preferably 0.950 $g/cm^3$ or less, more preferably 0. 940 $g/cm^3$ or less, and further more preferably 0. 930 $g/cm^3$ or less. When the density is 0.890 $g/cm^3$ or more, it is capable of maintaining film's stiffness within the operating temperature range. So, it is possible to inhibit wrinkles and longitudinal sink marks caused at a time of shrinkage but also to inhibit significantly decrease of the stiffness of the whole film at room temperature; thus it is preferable. Meanwhile, when the density is 0.950 $g/cm^3$ or less, elongation properties at low temperature can be maintained and heat shrinkage ratio within the operating temperature range can be sufficiently obtained; thus this is also preferable.

About the above polyethylene series resin, the one whose melt flow rate (MFR: JIS K7210, temperature: 190 °C, load: 21.18 N) is 0. 1 g/10 min or more and 10 g/10 min or less is suitably used. When MFR is 0.1 g/10 min or more, extrusion workability can be favorably maintained; meanwhile, when MFR is 10 g/10 min or less, unevenness in thickness and deterioration in mechanical strength of the film are hard to be caused; thus it is preferable.

Still further, examples of polypropylene series resin include homopropylene resin, random polypropylene resin, block polypropylene resin, and propylene-ethylene rubber. Among them, in view of elongation property, transparency, stiffness, and so on, random polypropylene resin is specifically preferably used.

In the above random polypropylene resin, $\alpha$-olefin to be copolymerized with propylene may be preferably $C_{2\text{-}20}$ $\alpha$-olefin, more preferably $C_{4\text{-}12}$ $\alpha$-olefin; specific examples thereof include ethylene, 1-butene, 1-pentene, 1-hexene, 1-heptene, 1-octene, 1-nonene, and 1-decene. In the invention, from the view point of elongation property, heat-shrinkage property, film's impact resistance transparency, stiffness, and the like, a random polypropylene whose $\alpha$-olefin content ratio is 2 mass % or more and 10 mass % or less is particularly suitably used. When the content ratio of the $\alpha$-olefin is 2 mass % or more, elongation property at low temperature is favorable, heat shrinkage ratio can be secured. Moreover, when content ratio of the $\alpha$-olefin is 10 mass % or less, stiffness of the film at a time of thermal shrinkage can be maintained. Thereby, wrinkles and longitudinal sink marks can be preferably inhibited. The $\alpha$-olefin to be polymerized may be used alone, or in combination of two or more kinds thereof.

Still further, melt flow rate (MFR) of the polypropylene series resin is not particularly limited to; MFR (JIS K7210, temperature: 230 °C, load: 21.18 N) is normally preferably 0.5 g/10 min or more, more preferably 1.0 g/10 min or more, and preferably 15 g/10 min or less, more preferably 10 g/10 min or less.

Next, about ethylene-vinyl acetate copolymer, content ratio of ethylene preferably 50 mol % or more and 95 mol % or less, more preferably 60 mol % or more and 85 mol % or less. When the content ratio of ethylene unit is 50 mol % or more, stiffness of the whole film can be favorably maintained; whereby it is preferable. Meanwhile, when the content ratio of ethylene unit is 95 mol % or less, rigidity (stiffness at room temperature) and thermal resistance of the whole film are not significantly deteriorated; thus it is practically preferable.

MFR of the above ethylene-vinyl acetate copolymer is not specifically restricted to; MFR (JIS K7210, temperature: 190 °C, load: 21.18 N) is normally preferably 0.5 g/10 min or more, more preferably 1.0 g/10 min or more, and preferably 15 g/10 min or less, more preferably 10 g/10 min or less.

With respect to the mass (weight) average molecular weight of the polyolefin series resin to be used in the present invention, the lower limit thereof is preferably 50,000, more preferably 100,000, and the upper limit is preferably 700,000, more preferably 600, 000, and further preferably 500, 000. If the mass (weight) average molecular weight of the polyolefin series resin is within the above range, practical physicality such as desired mechanical properties and thermal resistance can be realized, adequate melting viscosity and favorable formability can also be obtained.

The manufacturing method of the above polyolefin series resin is not particularly limited. Examples thereof include known copolymerization method using known olefin polymerization catalyst (for example, a method by use of multisite catalyst represented by Ziegler-Natta Catalyst and a method by use of singlesite catalyst represented by metallocen series catalyst): such as slurry copolymerization, solution copolymerization, mass polymerization, and gas-phase polymerization; the examples also include mass polymerization using radical initiator.

About the polyolefin series resin, as commercially available products of polyethylene series resin, commodity name "Novatec HD, LD, LL", "Kernel", and "Tufmer A, P" (manufactured by Japan Polyethylene Corporation); "Creolex" (manufactured by Asahi Kasei Chemicals Corporation); "Esprene SPO" and "Excellen VL" (manufactured by Sumitomo Chemical Co., Ltd.); and "ENGAGE" (manufactured by The Dow Chemical Company), and so on can be used. As polypropylene series resin, for instance, commodity name "Novatec PP" and "WINTEC" (manufactured by Japan Polypropylene Corporation), "Versify", "NOTIO", and "Tufmer XR" (manufactured by Mitsui Chemicals, Inc.), "Zelas" and "Thermorun" (manufactured by Mitsubishi Chemical Corporation), "Sumitomo Noblen" and "Tuf-selen" (manufactured by Sumitomo Chemical Co., Ltd.), "IDEMITSU TPO" (manufactured by Idemitsu Kosan Co., Ltd.), as well as "Adflex" and "Adsyl" (manufactured by SunAllomer Ltd.) can be used. Moreover, as ethylene-vinyl acetate copolymer, for example, "EVAFLEX" (manufactured by Du Pont-Mitsui Polychemicals Co. , Ltd.) and "Novatec EVA" (manufactured by Japan polyethylene Corporation) can be used.

Further, in the invention, in order to adjust shrinkage ratio, as required, adequate amount of petroleum resin may be added to the polyolefin series resin. Adding the petroleum resin enables to maintain elongation property at low temperature, hence improvement of heat-shrinkage property can be expected.

Examples of the above petroleum resin include: alicyclic petroleum resin obtained from cyclopentadiene or the dimer thereof; and aromatic petroleum resin obtained from $C_9$ component. The petroleum resin is known to show relatively favorable compatibility when mixed into polyolefin series resin and the like, in view of color tone, thermal stability, and compatibility, hydrogenated derivatives are preferably used.

Specifically, as commercially available products thereof, commodity name "Highlets", "Petrogine" manufactured by Mitsui Chemicals, Inc., commodity name "Alcon" manufactured by Arakawa Chemical Industries, Ltd., commodity name "I-MARV" manufactured by Idemitsu Kosan Co., Ltd., commodity name "ESCOLETS" manufactured by TONEX Co., Ltd. (merged to become Tonen Kagaku K.K.), and so on can be used.

The petroleum resin has various softening point depending on mainly molecular mass. In the invention, a petroleum resin whose softening point is 100 °C or more and 150 °C or less, preferably 110 °C or more and 140 °C or less is suitably used. If softening point of the petroleum resin is 100 °C or more, when mixed into polyolefin series resin, petroleum resin does not breed onto the film surface. Hence, blocking and deterioration of mechanical strength of the whole sheet, which tend to cause breakage of the sheet, are not caused. Thus, it is practically preferable.

On the other hand, when softening point is 150 °C or less, compatibility with polyolefin series resin can be favorably maintained, whereby the petroleum resin does not breed onto the film surface over time, blocking and deterioration of transparency are not caused; thereby it is preferable.

Mixing amount of the petroleum resin to be added to the (I) layer 11 is preferably 5 parts by mass or more and 80 parts by mass or less to 100 parts by mass of polyolefin series resin composing the (I) layer 11. When the mixing amount of the petroleum resin is 5 parts by mass or more, degree of brilliance of the film surface and shrinkage property can be improved.

Meanwhile, when the mixing amount of the petroleum resin is 80 parts by mass or less, it is possible to prevent the petroleum resin from breeding onto the film surface over time, to inhibit blocking with the neighboring films and decline of impact-resistance. Accordingly, mixing amount of the petroleum resin to be added to the (I) layer 11 is more preferably 10 parts by mass or more and 60 parts by mass or less to 100 parts by mass of the resin composing the (I) layer 11.

Apart from the above-described component, the (I) layer 11 can contain a resin used for the (II) layers 12a, 12b, in the range which does not significantly undermine the effect of the present invention. If addition of resin used for the (II) layers 12a, 12b to the (I) layer 11 is possible, e.g., recyclable resin obtained by trimming loss like ends of films and the like can be used, which enables to reduce the manufacturing cost. When the (I) layer 11 contains resin composing the (II) layers 12a, 12b, to 100 parts by mass of polyolefin series resin composing the (I) layer 11, ratio of the resin composing the (II) layers 12a, 12b is desirably 50 parts by mass or less, preferably 40 parts by mass or less, and further preferably 30 parts by mass or less. When the resin composing the (II) layers 12a, 12b is 50 parts by mass or less, deterioration of mechanical strength of the film can be inhibited and transparency in case of addition of a reclamation material can be maintained.

In addition, the (I) layer 11 may contain an adhesive resin used for the adhesive layers 23a, 23b. In case where the (I) layer 11 contain the resin composing the adhesive layers 23a, 23b, to 100 parts by mass of polyolefin series resin composing the (I) layer 11, the ratio of resin composing the adhesive layers 23a, 23b is desirably 1 part by mass or more and 30 parts by mass or less, preferably 25 parts by mass or less, and further preferably 20 parts by mass or less.

With respect to the film 10 of the first mode or the film 20 of the second mode of the present invention, apart from the above-described component, in the range without preventing the effect of the invention, for the purpose of improvement/adjustment of workability, productivity, and various properties of the heat-shrinkable film, to the (II) layers 12a, 12b, (I) layer 11, and (III) layers 23a, 23b, the following materials can be adequately added: inorganic particles such as silica, talc, kaolin; additives such as flame retardant, weatherability stabilizer, heat resistance stabilizer, antistatic agent, melt viscosity improver, cross-linker, lubricant, nucleating agent, plasticizer, and antiaging agent.

(Polyolefin series resin of the second mode)

Polyolefin series resin composing the (I) layer of the film of the present invention may be a polypropylene series resin whose melting point is 90 °C or more and 130 °C or less, and whose content ratio of propylene monomer unit is 80 mass % or more and 99 mass % or less.

Conventionally, when a heat-shrinkable film is produced by using a conventional polypropylene resin, as crystallinity of the polypropylene resin is high, treatment has to be given within relatively high temperature range at a time of heat forming. The conventional polypropylene resin is inferior in heat-shrinkage at low temperature; so, when the heat-shrinkable film is produced, it is difficult to obtain heat-shrinkage property at low temperature and flexibility. Further, in case where PLA is contained into the conventional polypropylene resin, since the conventional polypropylene resin has high refractive index and causes light scattering along the interface with PLA, there is a problem of deterioration of transparency of the whole film.

In the film of the present invention, so as to solve the above problems, among polypropylene resins, a polypropylene series resin, which is capable of thermoforming within relatively low-temperature range and contains PLA, and whose melting point is set within the range between 90 °C or more and 130 °C or less and whose content ratio of propylene monomer unit is set within 80 mass % or more and 99 mass % or less so as to maintain the transparency, can be preferably used.

The melting point of the above-described polypropylene series resin is 90 °C or more, preferably 95 °C or more, further preferably 100 or more, and 130 °C or less, preferably 125 °C or less. If the heat-shrinkable film contains the polypropylene series resin whose melting point is within the above range, heat-shrinkage property at low temperature can be obtained, and shrinkage ratio in orthogonal direction at a time of shrinkage at high-temperature can be inhibited. Therefore, cause of the so-called "longitudinal sink mark" can be inhibited.

Moreover, content ratio of propylene monomer unit of the above polypropylene series resin is 80 mass % or more, preferably 85 mass % or more, more preferably 90 mass % or more, and 99 mass % or less, preferably 97 mass % or less, more preferably 95 mass % or less. If it is the film obtained from the polypropylene series resin in which content ratio of the propylene monomer unit is within the above range, crystallinity is low; thereby the refractive index can be reduce. This results in the inhibition of diffuse reflection in the interface to maintain the transparency even when PLA is added to the (I) layer. In addition, since appropriate crystallinity can be obtained so that stiffness can be given to the film, thermal treatment at relatively low-temperature region becomes possible, thereby shrinkage property at low-temperature can be imparted.

Further, in order to give low-temperature properties and flexibility at room temperature, the above-described polypropylene series resin may be the one copolymerized α-olefin such as ethylene, butane, or hexene with propylene. Among them, in case where ethylene-propylene copolymer is used, when PLA is added, film's transparency can be maintained, thereby it is particularly preferable.

The above described polypropylene series resin may have structures like homo, random, block; in view of elongation property, transparency, and stiffness, a polypropylene series resin having random structure or a polypropylene series resin having random structure obtained by using metallocen catalyst may be preferable.

Moreover, melt flow rate (MFR) of the above-descrived polypropylene series resin is not specifically limited to; the MFR (JIS K7210, temperature: 230 °C, load: 2.16 kg) is desirably normally 0.5 g/10 min or more, preferably 1.0 g/10 min or more, and 15 g/10 min or less, preferably 10 g/10 min or less. In order to obtain a film of even thickness, MFR of the polypropylene series resin can be selected to the one having similar viscosity of polylactic acid series resin in molten state.

The manufacturing method of the above polypropylene series resin is not particularly limited. Examples thereof include known copolymerization method using known olefin polymerization catalyst, (for example, a method by use of multisite catalyst represented by Ziegler-Natta Catalyst and a method by use of singlesite catalyst represented by metallocen series catalyst) such as slurry copolymerization, solution copolymerization, mass polymerization, and gas-phase polymerization; the examples also include mass polymerization using radical initiator.

Examples of commercially available product of the above polypropylene series resin include "WINTEC" (manufactured by Japan Polypropylene Corporation) as a metallocen polypropylene, and "VERSIFY" (manufactured by The Dow Chemical Company) as an ethylene-propylene copolymer.

In case where polypropylene series resin of the second mode is used as the polyolefin series resin composing the (I) layer, the (I) layer may contain a PLA usable in the (II) layer, or a below-described adhesive resin usable in the (III) layer. As a consequent, the film of the invention can be added to the (I) layer as a reclamation material and recyclability of the film can be improved. When the (I) layer contains PLA, content of the PLA, to 100 parts by mass of the above polypropylene series resin contained as a main component of the (I) layer, is preferably 100 parts by mass or less, more preferably 80 parts by mass or less, further preferably 60 parts by mass or less, and most preferably 30 parts by mass or less. The lower limit is not specifically restricted to; it is preferably 3 parts by mass or more, and more preferably 10 parts by mass or more. The polypropylene series resin to be used in the invention exhibits lower refractive index compared with the conventional polypropylene series resin, to 100 parts by mass of the above polypropylene series resin, setting the content of the PLA to be 100 parts by mass or less enables to maintain transparency, stiffness, rupture-proof resistance, shrink finishing quality (shrinkage property at low temperature), and so on of the obtained film.

On the other hand, when the (I) layer contains the adhesive resin usable for the (III) layer, the upper limit of the content is changed depending on the type of adhesive resin; to 100 parts by mass of the above polypropylene series resin contained as the main component of the above (I) layer (as a rough standard), the upper limit of the adhesive resin may be 8 parts by mass or less, preferably 6 parts by mass or less, further preferably 5 parts by mass or less. The lower limit is not specifically limited; it is preferably 1 part by mass or more. To 100 parts by mass of the above polypropylene series resin, if content of the adhesive resin is 8 parts by mass or less, transparency, rupture-proof resistance, shrink finishing quality, and so on of the obtained film can be maintained.

In case where the PLA is contained in the (I) layer, in order to make the dispersion diameter of PLA smaller and to improve the haze value, compatibility agents may be added.

(Polyolefin series resin of the third mode)

The polyolefin series resin composing the (I) layer for the film of the present invention is preferably a polyolefin series resin having an ethylene-vinyl acetate copolymer as a main component and containing propylene series resin.

The present inventors had seriously studied about a polypropylene series resin compatible with the favorable shrinkage property and film's transparency when the addition of a reclamation material is carried out in the (I) layer as a reclamation material. As a result, the inventors discovered the fact that: when polypropylene series resin is mixed to a ethylene-vinyl acetate copolymer, decrease of shrinkage ratio (i.e., the so-called "longitudinal sink mark".) about the direction orthogonal to the film's main shrinking direction can be inhibited; moreover, as high-melting point component is added to ethylene-copolymer, it is possible to obtain a film which exhibits excellent shrink finishing quality by keeping elastic modulus when shrinking and maintaining transparency. Further, the inventors also discovered that one of the mechanical properties, i.e. elastic modulus, of the heat-shrinkable film can also be raised.

Hitherto, the present inventors repeated trial-and-error experiments regarding a heat-shrinkable laminated film having a layer mainly containing ethylene-vinyl acetate copolymer and a layer mainly containing polylactic acid. However, when content ratio of the vinyl acetate monomer unit in the ethylene-vinyl acetate copolymer was raised, shrinkage property about high-temperature range was retarded, which was found out to cause defective in finishing quality at a time of shrinkage. So, for the ethylene-vinyl acetate copolymer to be used for the (I) layer, content ratio of vinyl acetate monomer unit is set to preferably 5 mass % or more, more preferably 8 mass % or more, further preferably 10 mass % or more, and preferably 30 mass % or less, more preferably 20 mass % or less, further preferably 15 mass % or less. If content ratio of vinyl acetate monomer unit is 5 mass % or less, it is preferable because stiffness of the whole film can be favorably maintained. On the other hand, if the content ratio of the vinyl acetate monomer unit is 30 mass % or less, rigidity (stiffness at room temperature) of the whole film and thermal resistance are not significantly deteriorated. Thus, it is practically preferable.

Melt flow rate (MFR) of the above ethylene-vinyl acetate copolymer is not specifically restricted to; normally, MFR (JIS K7210, temperature: 190 °C, load: 2.16 kg) is preferably 0.5 g/10 min or more, more preferably 1.0 g/10 min or more, and preferably 15 g/10 min or less, more preferably 10 g/10 min or less. In order to obtain a film of even thickness, MFR of the ethylene-vinyl acetate copolymer can be selected to the one having similar viscosity of polylactic acid series resin in molten state.

Mass ratio of ethylene-vinyl acetate copolymer and polypropylene series resin in the (I) layer:

(ethylene-vinyl acetate copolymer)/(propylene series resin), is preferably 40/60-95/5; more preferably 60/40-85/15. By setting the content ratio of polypropylene series resin to 5 mass % or more, to the total mass of the ethylene-vinyl acetate copolymer and polypropylene series resin, it is possible to obtain a

heat-shrinkable laminated film having excellent shrink finishing quality while keeping the elastic modulus at a time of shrinkage attributed to high-melting point of the polypropylene series

resin as well as remaining favorable transparency. Meanwhile, by setting the content ratio of polypropylene series resin to 60 mass % or less, favorable heat shrinking properties at high-temperature region can be maintained.

In the polyolefin series resin of the third mode of the invention, examples of the applicable polypropylene series resin include: homopropylene resin, random polypropylene resin, block polypropylene resin, ethylene-propylene rubber, ethylene-butene rubber, and ethylene-diene rubber. Among them, in view of elongation property, transparency, and stiffness, random polypropylene resin is particularly suitably used.

In the polyolefin series resin of the third mode of the invention, a copolymer of propylene and $\alpha$-olefin can be used as a polypropylene resin. As an $\alpha$-olefin to be polymerized with propylene, there may be preferably $C_{2-20}$ $\alpha$-olefin, more preferably $C_{4-12}$ $\alpha$-olefin; the specific examples include ethylene, 1-butene, 1-pentene, 1-hexene, 1-heptene, 1-octene, 1-nonene, and 1-decene. The $\alpha$-olefin to be copolymerized may be used alone or may be in combination of two or more kinds thereof.

About the film of the invention, in view of elongation property, heat-shrinkage property, film's impact resistance, transparency, stiffness, and so on, the polypropylene in the polyolefin series resin of the third mode is preferably a copolymer of polypropylene and $\alpha$-olefin. Content ratio of propylene monomer unit in the copolymer is 90 mass % or more, preferably 92 mass % or more, and 98 mass % or less, preferably 96 mass % or less; a random polypropylene copolymer whose $\alpha$-olefin is ethylene monomer unit is particularly suitably used.

Moreover, melt flow rate (MFR) of the polypropylene series resin is not specifically limited to, MFR (JIS K7210, temperature: 230 °C, load: 2.16 kg) is normally preferably 0.5 g/10 min or more, more preferably 1.0 g/10 min or more, and preferably 15 g/10 min or less, more preferably 10 g/10 min or less. In order to obtain a film of even thickness, MFR of the polypropylene series resin can be selected to the one having similar viscosity of polylactic acid series resin in molten state.

The manufacturing method of the above ethylene-vinyl acetate copolymer and polypropylene series resin is not particularly limited. Examples thereof include known copolymerization method using known olefin polymerization catalyst (for example, a method by use of multisite catalyst represented by Ziegler-Natta Catalyst and a method by use of singlesite catalyst represented by metallocen series catalyst): such as slurry copolymerization, solution copolymerization, mass polymerization, and gas-phase polymerization; the examples also include mass polymerization using radical initiator.

Examples of commercially available products of the above ethylene-vinyl acetate copolymer include "EVAFLEX" (Du Pont-Mitsui Polychemicals Co., Ltd.), "Novatec EVA" (manufactured by Mitsubishi Chemical Corporation), "EVATHLENE" (manufactured by DIC Corporation), and "EVATATE" (manufactured by Sumitomo Chemical Co., Ltd.). In addition, Examples of commercially available products of the above polypropylene series resin include commodity name "Novatec PP", "WINTEC", and "Tufmer XR" (manufactured by Japan Polypropylene Corporation), "MITSUI POLYPRO" (manufactured by Mitsui Chemicals, Inc.), "SUMITOMO NOBLEN", "Tuf-selen", "EXCELLEN EPX" (manufactured by Sumitomo Chemical Co., Ltd.), "IDEMITSU PP" and "IDEMITSU TPO" (manufactured by Idemitsu Kosan Co. , Ltd.), as well as "Adflex" and "Adsyl" (manufactured by SunAllomer Ltd.).

In the third mode, the (I) layer can contain a PLA usable for the (II) layer; further, it can contain an adhesive resin usable for the below-described (III) layer. As a consequence, the film of the invention can be added to the (I) layer as a reclamation material and recyclability of the film can be improved. When the (I) layer contains PLA, the content, to 100 parts by mass of the polyolefin series resin including a mixture of ethylene-vinyl acetate copolymer of the above (I) layer and propylene series resin, may be 100 parts by mass or less, preferably 80 parts by mass or less, further preferably 60 parts by mass or less. The lower limit of the content is not specifically limited to; 10 parts by mass or more is preferable. If the content of PLA to 100 parts by mass of the above polyolefin series resin is 100 parts by mass or less, it is possible to maintain the transparency, rupture-proof resistance, shrink finishing quality, and so on of the obtained film.

On the other hand, in case where the (I) layer contains the adhesive resin usable for the (III) layer, the upper limit of the content is changed depending on the type of the adhesive resin; to 100 parts by mass of polyolefin series resin (as a rough standard) consisting of a mixture of ethylene-vinyl acetate copolymer of the above (I) layer and propylene series resin, the content of the adhesive resin may be 8 parts by mass or less, preferably 6 parts by mass or less, further preferably 5 parts by mass or less. The lower limit of the content is not specifically limited to; 1 part by mass or more is preferable. If the content of the adhesive resin to 100 parts by mass of the above polyolefin series resin is 8 parts by mass or less, transparency, rupture-proof resistance, shrink finishing quality, and so on of the obtained film can be maintained.

<(III) layer (adhesive layer)>

As the second mode of the film of the present invention, as shown in Fig. 2, a film 20 having the (III) layer 23a, 23b disposed for the purpose of adhesion between the (I) layer 11 and (II) layers 12a as well as (I) layer 11 and (II) layers 12b can be provided as an example.

The adhesive layers 23a, 23b used in the invention contain an adhesive resin as the main component. The adhesive resin contained as the main component of the (III) layer is not specifically limited to as long as it is a resin which can adhere the (I) layer and the (II) layer; the adhesive layers may be preferably at least one copolymer or a resin selected from the following (a), (b), and (c).

(a) copolymer (hereinafter, refer to as "ethylene series copolymer".) of ethylene-monomer unit with a unit of one selected from the group consisting of: vinyl acetate, acrylic acid, (meth) acrylic acid, ethyl (meth) acrylate, methyl (meth) acrylic acid, maleic anhydride, and glycidyl methacrylate;

(b) copolymer of flexible aromatic series hydrocarbon with conjugated diene series hydrocarbon, or the hydrogenated derivatives thereof; and
(c) modified polyolefin series resin.

Firstly, (a) ethylene series copolymer will be described. Examples of the above ethylene series copolymer include: ethylene-vinyl acetate copolymer (EVA), ethylene-acrylic acid copolymer (EAA), ethylene-(meth) acrylic acid copolymer (EMA), ethylene-ethyl (meth) acrylate copolymer (EEA), ethylene-methyl (meth) acrylic acid copolymer (EMMA), ethylene-vinyl acetate-maleic anhydride ternary copolymer, ethylene-ethyl acrylate-maleic anhydride ternary copolymer, ethylene-glycidyl methacrylate copolymer, ethylene-vinyl acetate-glycidyl methacrylate ternary copolymer, and ethylene-ethyl acrylate-glycidyl methacrylate ternary copolymer. Among them, ethylene-vinyl acetate copolymer (EVA), ethylene-acrylic acid copolymer (EAA), ethylene-ethyl acrylate copolymer (EEA), ethylene-(meth) acrylic acid copolymer (EMA), and ethylene-methyl (meth) acrylic acid copolymer (EMMA) may be preferably used.

The above ethylene series copolymer desirably contains ethylene monomer unit at a content ratio of 50 mol % or more, preferably 60 mol % or more, further preferably 65 mol % or more, and 95 mol % or less, preferably 90 mol % or less, further preferably 85 mol % or less. If the content ratio of the ethylene monomer unit is 50 mol % or more, stiffness of the whole film can be favorably maintained; thus it is preferable. Meanwhile, in case where content ratio of the ethylene monomer unit is 95 mol % or less, flexibility of the film can be sufficiently maintained. So, when the film is stressed, buffering action functions against the stress caused between the (I) layer and the (II) layer; therefore interlayer peeling can be inhibited.

About the ethylene series copolymer, the one whose MFR (JIS K7210, temperature: 190 °C, load: 2.16 kg) is 0.1 g/10 min or more and 10 g/10 min or less can be suitably used. When MFR is 0.1 g/10 min or more, extrusion workability can be favorably maintained. On the other hand, when MFR is 10 g/10 min or less, film's unevenness in thickness and deterioration of mechanical strength tend to be caused. Thus the above ethylene series copolymer is preferable.

Examples of the commercially available above ethylene series copolymer include: "EVAFLEX EV40LX" (manufactured by Du Pont-Mitsui Polychemicals Co., Ltd., ethylene content: 78 mol %, MFR: 2.5 g/10 min) as ethylene-vinyl acetate copolymer; "ACRYFT" (manufactured by Sumitomo Chemical Co., Ltd.) as ethylene-methyl (meth) acrylic acid copolymer; "BONDINE" (manufactured by Sumitomo Chemical Co., Ltd.) as ethylene-vinyl acetate-maleic anhydride ternary copolymer; "Bond First" (manufactured by Sumitomo Chemical Co., Ltd.) as ethylene-glycidyl methacrylate copolymer, ethylene-vinyl acetate-glycidyl methacrylate ternary copolymer, and ethylene-ethyl acrylate-glycidyl methacrylate ternary copolymer.

Secondly, the above (b) copolymer of flexible aromatic series hydrocarbon with conjugated diene series hydrocarbon, and the hydrogenated derivatives thereof will be described. Examples of aromatic series hydrocarbon composing the copolymer of flexible aromatic series hydrocarbon with conjugated diene series hydrocarbon may preferably include styrene, styrene congener such as $\alpha$-methyl styrene can also be used. Examples of the conjugated diene series hydrocarbon include 1,3-butadiene, 1,2-isoprene, 1,4-isoprene, and 1,3-pentadiene, these may be hydrogenated derivatives. These may be used alone or may be used in combination of two or more kinds thereof.

The above copolymer of aromatic series hydrocarbon with conjugated diene series hydrocarbon, or the hydrogenated derivatives thereof is desirably a flexible copolymer whose content ratio of the aromatic series hydrocarbon to total mass of the copolymer is 5 mass % or more, preferably 7 mass % or more, further preferably 10 mass % or more, and 50 mass % or less, preferably 40 mass % or less, further preferably 35 mass % or less. When content ratio of the aromatic series hydrocarbon is 5 mass % or more, in case where the recyclable film as a reclamation material is added to any one of the (I) layer, (II) layer, and the (III) layer (preferably (I) layer), favorable compatibility can be obtained, which prevents the obtained film from white turbidity and maintains transparency of the film. On the other hand, when content ratio of aromatic series hydrocarbon is 50 mass % or less, in case where the film is stressed without lowering the flexibility of the (I) layer, buffering action functions against the stress caused between the (I) layer and the (II) layer; therefore interlayer peeling can be inhibited.

As a hydrogenated derivatives of the copolymer containing aromatic series hydrocarbon with conjugated diene series hydrocarbon, hydrogenated derivatives of styrene-conjugated diene series random copolymer can be preferably used. Detailed content of the hydrogenated derivatives of styrene-conjugated diene series random copolymer and manufacturing method thereof are disclosed in Japanese Patent Application Laid-Open (JP-A) No. 2-158643, JP-A No. 2-305814, and JP-A No. 3-72512.

The aromatic series hydrocarbon-conjugated diene series hydrocarbon copolymer to be used may be each of the above listed copolymer alone or a combination of two or more kinds thereof.

Examples of commercially available products of the aromatic series hydrocarbon-conjugated diene series hydrocarbon copolymer include: commodity name "TUFPRENE" (manufactured by Asahi Kasei Chemicals Corporation) as styrene-butadiene block copolymer elastomer, commodity name "Tuftec H" (manufactured by Asahi Kasei Chemicals Corporation) and commodity name: "Kraton G" (manufactured by Kraton Polymers Japan Ltd.) as hydrogenated derivatives of styrene-butadiene block copolymer, commodity name "DYNARON" (manufactured by JSR Corporation) as hydrogenated derivatives of styrene-butadiene random copolymer, commodity name "SEPTON" (manufactured by KURARAY Co., Ltd.) as hydrogenated derivatives of styrene-isoprene block copolymer, as well as commodity name "HYBRAR" (manufactured by KURARAY Co., Ltd.) as styrene-vinyl isoprene block copolymer elastomer.

By introducing polar groups, the above copolymer of aromatic series hydrocarbon with conjugated diene series hydrocarbon or the hydrogenated derivatives thereof can significantly improve interlayer adhesion with the (I) layer mainly containing polylactic acid series resin. Examples of polar group include: an acid anhydride group, a carboxylic group, a carboxylic acid ester group, a carboxylic acid chloride group, a carboxylic amide group, a carboxylic base, a sulfonic group, a sulfonate ester group, a sulfonic chloride group, a sulfonic acid amide group, a sulfonic acid salt group, an epoxy group, an amino group, an imide group, an oxazoline group, and a hydroxyl group. Typical examples of copolymer, in which the polar groups are introduced, of styrene series compound with conjugated diene or the hydrogenated derivatives thereof may be maleic anhydride-modified SEBS, maleic anhydride-modified SEPS, epoxy modified SEBS, and epoxy modified SEPS. These copolymers can be used alone or used in combination of two or more kinds thereof.

The examples of commodity name of the copolymer, in which the polar groups are introduced, of aromatic series hydrocarbon with conjugated diene series hydrocarbon, or the hydrogenated derivatives thereof include: "Tuftec M" (manufactured by Asahi Kasei Chemicals Corporation) and "Epofriend" (manufactured by Daicel Chemical Industries, Ltd.).

Thirdly, the above (c) modified polyolefin resin will be described. In the present invention, the modified polyolefin resin capable of forming the (III) layer means a resin containing unsaturated carboxylic acid or the anhydride thereof, or polyolefin modified by a silane coupling agent, as a main component. Examples of unsaturated carboxylic acid or the anhydride thereof include: acrylic acid, methacrylate, maleic acid, maleic anhydride, citraconic acid, anhydrous citraconic acid, itaconic acid, anhydrous itaconic acid; ester compound of monoepoxy compound of these derivatives with the above acids; and reaction product of acid and polymer in the molecule of which groups reacting with the above acids exist. Moreover, the metal salt thereof can also be used. Among them, maleic anhydride is more preferably used. Further, these copolymers can be used alone or in combination of two or more kinds thereof.

Examples of silane coupling agent include vinyltriethoxysilane, metacroyl oxytrimethoxysilane, and γ-methacryloyl oxypropyltriacetyloxysilane.

In order to produce the modified polyolefin resin, for example: modified monomer can be copolymerized at a stage for polymerizing a polymer in advance; or to a polymer once polymerized, these modified monomers can be copolymerized by graft copolymerization. Further, for modification, the resin in which one of the above modified monomers is used alone or in combination of a plurality of these monomers are used and one whose content ratio of is within the range of 0.1 mass % or more and 5 mass % or less is suitably used. Among these, resin produced by graft modification can be suitably used.

Examples of commercially available modified polyolefin series resin include "ADMER" (manufactured by Mitsui Chemicals, Inc.) and "MODIC-AP" (manufactured by Mitsubishi Chemical Corporation).

The above (III) layer may be any one of copolymers or resin of the above-described (a) to (c) alone, or in combination of two or more kinds thereof. In that case, content ratio of the above copolymers or resin of (a) to (c) can be determined depending on the resin composing the (I) layer and the (II) layer.

<Lamination composition of the film>

The film of the present invention include: the (I) layer 11 containing at least one polyolefin series resin as a main component; and the (II) layers 12a, 12b laminated on both side of the (I) layer 11 and containing at least one polylactic acid series resin as a main component. Because the films 10, 20 of the invention is a heat-shrinkable film including a polyolefin series resin and a polylactic acid resin, these of which have relatively similar flexibility to each other, therefore when the recyclable resin obtained from trimming loss like ends of films is added to as a reclamation material, film's transparency can be secured.

The film of the invention, as long as lamination composition includes at least the above three layers, it does not specifically limited to. Here, the phrase "(II) layers (12a, 12b) laminated on both side of the (I) layer (11)" means not only a case where the (II) layers are adjacently laminated to the (I) layer (first mode) but also a case where a third layer is disposed between the (I) layer and the (II) layer (e.g., second mode). Moreover, the (I) layer may include a similar layer as the (II) layer.

In the invention, the lamination is formed by a three-layer lamination composition consisting of (II) layer 12a/ (I) layer 11/ (II) layer 12b; more preferably lamination composition may be a five-layer lamination composition consisting of (II) layer 12a/ adhesive layers 23a/ (I) layer 11/ adhesive layer 23b/ (II) layer 12b. By adopting the lamination composition, it is possible to efficiently and economically obtain a heat-shrinkable laminated film, which achieves the object of the invention, i.e. exhibiting excellent shrinkage property at low temperature, film's rigidity (stiffness at room temperature), shrink finishing quality, and shows small natural shrinkage, whose interlayer peeling films 10, 20 is inhibited, and which is suitably used for shrinkable packing, shrinkable banding packing, shrinkable label, or the like.

Next, a suitable modes of the present invention, i.e. the film 10 having the three-layer lamination composition as (II) layer 12a/ (I) layer 11/ (II) layer 12b, and the film 20 having the five-layer lamination composition as (II) layer 12a/ adhesive layers 23a/ (I) layer 11/ adhesive layer 23b/ (II) layer 12b will be described.

Thickness ratio of each layer may be determined by considering the above-described effects; it is not specifically restricted. Thickness ratio of the (II) layers 12a, 12b to the total thickness of the film can be determined within the range of 10% or more, preferably 15% or more, further preferably 20% or more, and 80% or less, preferably 70% or less, further preferably 50% or less, most preferably 45% or less. Thickness ratio of the (I) layer to the total thickness of the film is 10% or more, preferably 20% or more, further preferably 30% or more, and 90% or less, preferably 85% or less, further preferably 80% or less.

In case where the adhesive layers 23a, 23b are respectively disposed between the (I) layer 11 and the (II) layer 12a, as well as between the I) layer 11 and the (II) layer 12b, in view of the function, thickness of the adhesive layers 23a, 23b is 0.5 $\mu$m or more, preferably 0.75 $\mu$m or more, further preferably 1 $\mu$m or more, and 6 $\mu$m or less, preferably 5 $\mu$m or less.

When thickness ratio of each layer is within the above range, it is possible to obtain the films 10, 20 which exhibits excellent shrink finishing quality, shrinkage property at low temperature of the film, which shows small natural shrinkage, and suitable for shrinkable packing, shrinkable banding packing, shrinkable label, or the like.

Total thickness of the film of the invention is not particularly limited to; from the view point of transparency, shrinkage property, material cost, and so on, thinner film would be better. Specifically, total thickness of the film after elongation is 80 $\mu$m or less, preferably 70 $\mu$m or less, further preferably 50 $\mu$m or less, and most preferably 40 $\mu$m or less. Moreover, the lower limit of the total thickness of the film is not specifically limited to; considering the handleability of the film, 10 $\mu$m or more is preferable.

<Physical and mechanical properties>

(Storage elastic modulus (E') at 80 °C)

In the present invention, when dynamic viscoelasticity is measured about the direction orthogonal to the film's elongation direction under the condition of vibrational frequency at 10 Hz, strain at 0.1%, rate of temperature rise at 2 °C/min, and inter-chuck distance of 2.5 cm, within the range of measurement temperature between -150 °C and 150 °C, it is important for the storage elastic modulus (E') at 80 °C to be 10 MPa or more, more preferably 30 MPa or more, further preferably 50 MPa or more. Meanwhile, the upper limit is 1,000 MPa or less, more preferably 800 MPa or less, and further preferably 600 MPa or less. In case where storage elastic modulus (E') at 80 °C is 10 MPa or more, when the film is heated and shrunk at the step of fitting to the bottle, film's stiffness is sufficient, thereby occurrence of wrinkles and longitudinal sink marks can be inhibited. On the other hand, in case where storage elastic modulus (E') is 1,000 MPa or less, elongation property at low temperature is favorable and heat shrinkage ratio can be secured; therefore it is preferable.

In the film of the invention, adjusting the storage elastic modulus (E') at 80 °C within the above range can be possible by adjusting the resin composition in accordance with the method described in this invention; when measured by using particularly differential scanning calorimeter (DSC), it can be easily achieved by using a polyolefin series resin having at least one or more crystal melting peaks within the range between 80 °C or more and 160 °C or less. Other than this, raising ratio of the (II) layers 12a, 12b to the whole film may be effective.

(Elongation modulus)

About film rigidity (stiffness at room temperature) of the present invention, elongation modulus about the direction orthogonal to the film's main shrinking direction may be preferably 800 MPa or more, more preferably 1,000 MPa or more, and further preferably 1,200 MPa or more. In addition, the upper limit of elongation modulus of the normally-used heat-shrinkable film is about 4, 000 MPa, preferably about 3,500 MPa, and further preferably 3,000 MPa. If elongation modulus about the direction orthogonal to the film's main shrinking direction is 800 MPa or more, rigidity of the whole film (stiffness at room temperature) can be raised. So, even in case where the thickness of the film is specifically made thin, when covering a film made in a form of bag to a container such as PET bottle by using labeling machine and so on, such a film tends not to cause problems like oblique coverage and decline of yield due to the film bending; thus, it is preferable. Elongation modulus can be measured at a temperature of 23 °C in accordance with JIS K7127.

In order to adjust the elongation modulus about the direction orthogonal to the film's main shrinking direction to 800 MPa or more, it is important to set the resin composition of each layer within the range defined in the invention. Particularly, setting thickness ratio of the (II) layer to 10% or more and setting thickness of the (III) layer to 5 μm or less, to the thickness of the whole film, are preferable.

(Heat shrinkage ratio)

Further, about the film of the present invention, heat shrinkage ratio about the main shrinking direction when dipped in hot water at 80 °C for 10 seconds is preferably 20% or more. The heat shrinkage ratio is an index for judging adaptability of the film to the relatively short-time (several seconds to dozen seconds) shrinking process of label shrinkage for PET bottles. For example, necessary heat shrinkage ratio required for heat-shrinkable film which is applicable to shrinkable labels for PET bottles is varied depending on the shapes; in general, it is about 20-70%.

As a heat shrink machines, currently industrially most widely used for label fitting to PET bottles, there is one which is the so-called "steam shrinker" using water vapor as a heating medium for shrinking process. The heat-shrinkable film, from the view point of influence of heat to objects to be covered, is required to be sufficiently thermally shrunk at as low temperatures as possible. Moreover, with speeding up in labeling step in recent years, requirement for quick shrinkage in lower temperature is increasing. Considering such an industrial productivity, if the film exhibiting heat shrinkage ratio under the above conditions is within the range of 20% or more, sufficient adhesion can be realized to the object to be covered within the shrink machining time; thus it is preferable. Accordingly, heat shrinkage ratio when dipped in hot water at 80 °C for 10 seconds is at least about one direction, normally about the main shrinking direction, preferably 20% or more, more preferably 30% or more, further preferably 40% or more; the upper limit is preferably 85% or less, more preferably 80% or less, further preferably 75% or less.

In the film of the invention, heat shrinkage ratio when dipped in hot water at 70 °C for 10 seconds about the main shrinking direction is preferably 10% or more, more preferably 20% or more, further preferably 25% or more, the upper limit is preferably 40% or less, more preferably 35% or less. By setting the heat shrinkage ratio at 70 °C about the main shrinking direction to 10% or more, when carrying out bottle labeling by steam shrinker, it is capable of inhibiting uneven shrinkage which regionally tends to occur. As a consequent, formation of wrinkles, pocks, and so on can be inhibited. Setting the upper limit of the heat shrinkage ratio to 40% or less enables to inhibit extreme shrinkage at low temperature; for instance, it is possible to maintain the natural shrinkage within a small range even under high-temperature environment like in case of summer season.

When the film of the invention is used as a heat-shrinkable label, the heat shrinkage ratio about the direction orthogonal to the main shrinking direction, average of the heat shrinkage ratio when dipped in hot water at 60 °C and hot water at 90 °C respectively for 10 seconds is preferably within $\pm 5\%$, more preferably within $\pm 4\%$, and further preferably within $\pm 3\%$. When average of the heat shrinkage ratio about the direction orthogonal to the main shrinking direction when dipped in hot water at 60 °C and hot water at 90 °C is within $\pm 5\%$: dimension itself, after shrinkage, about the main shrinking direction and about the direction orthogonal to the main shrinking direction tends to become shorter; strains or the like in post-shrinkage printing patterns and characters tend to occur; and troubles such as longitudinal sink mark in case of prismatic bottle are hardly seen. Hence, it is preferable.

In the film of the invention, so as to set the heat shrinkage ratio about the main shrinking direction after dipping in hot water at 80 °C for 10 seconds to 20% or more as well as to set the average of the heat shrinkage ratio in the direction orthogonal to the main shrinking direction after dipping in hot water at 60 °C and hot water at 90 °C within $\pm 5\%$, it is important to define the resin composition of each layer within the range described in the present invention. Further, it is preferable to control thickness ratio of the (II) layer to 10% or more and to control the thickness of the (III) layer to 5 $\mu$m or less, to the thickness of the whole film, as well as to control elongation magnification to twice or more and 10 times or less and elongation temperature to 60 °C or more and 130 °C or less.

(Natural shrinkage ratio)

Natural shrinkage ratio of the film of the present invention is desirably as small as possible; in general, the natural shrinkage ratio of heat-shrinkable film is, for example, the natural shrinkage ratio after 30 days storage at 30 °C,/50% RH is preferably below 3.0%, more preferably 2.0% or less, further preferably 1.5% or less. When natural shrinkage ratio under the below-described conditions is below 3.0%, even after long-term storage, the produced film can be stably fitted to containers and hardly cause any problems. As a measurement to adjust natural shrinkage ratio of the above film, it is important to make the resin composition of each layer within the range defined in the invention; specifically, setting thickness ratio of the (II) layer to the thickness of the whole film is preferably 10% or more.

(Transparency)

Transparency of the film of the present invention is, for instance, in case where a film of 40 $\mu$m in thickness is measured in accordance with JIS K7105, haze value of the film is preferably 10% or less, more preferably 7% or less, and further preferably 5% or less. When haze value of the film is 10% or less, transparency of the film can be obtained, which enables to give displaying effect to the film.

Still further, about the film of the invention, in case where the (I) layer contains PLA alone used in the (II) layer or a combination of PLA of the (II) layer and the adhesive resin used in the (III) layer, haze value of the film of 40 $\mu$m in thickness measured in accordance with JIS K7105 is preferably 10% or less, more preferably 7% or less, further preferably 5% or less. When haze value of the film having the (I) layer containing PLA alone or combination of PLA and adhesive resin is 10% or less, it is possible to maintain favorable transparency even when recyclable resin is added to the (I) layer. As a result, in the film of the invention, both ends (heels) of the film and the like produced in the manufacturing process of the film can be recycled as a reclamation material, but also transparency of the obtained film can be favorably maintained. Haze value of the film after addition of the recycled film can be adjusted by increasing and decreasing of additive amount at a time of addition of recycled film. For example, by adjusting additive amount of PLA to the (I) layer into the range within 10 parts by mass or more and 100 parts by mass or less, and adjusting additive amount of the adhesive resin into the range within 1 part by mass or more and 5 parts by mass or less, it is possible to control haze value of the film to the range of 10% or less.

(Impact resistance)

Impact resistance of the film of the present invention is evaluated based on tensile rupture elongation. In tensile test under 0 °C environment, particularly for label application, degree of elongation about the film's drawing (flow) direction (MD) is preferably 100% or more, more preferably 150% or more, further preferably 200% or more. When tensile rupture elongation under 0 °C environment is 100% or more, problems like breakage of films in printing step, bag-making step, and the like becomes difficult to occur; thus it is preferable. In addition, when the tension to the film increase with speeding-up of printing step, bag-making step, and so on, if tensile rupture elongation is 100% or more, the film becomes difficult to be broken, thereby preferable. On the other hand, the upper limit of tensile rupture elongation about the orthogonal direction is not specifically restricted, about 500% is preferable.

(Strength of solvent sealing)

Strength of solvent sealing of the film of the invention at a time of bag-making, being measured by the measurement method described in the following Examples, is preferably 2 N/15 mm wide or more, more preferably 4 N/15 mm wide or more, further preferably 6 N/15 mm wide or more. The term "strength of solvent sealing" means peel strength of the seal portion made at a time of film packaging into a cylindrical form by below-described center seal. In case where mating film surfaces themselves (both ends of the film) are not sufficiently swollen with sealing solvent or in case where interlayer adhesive force between the (I) layer and the (II) layer is poor, sufficient sealing strength cannot be secured. As for the film of the invention, by laminating the (II) layer as a surface layer and a backside layer, film's surface is sufficiently swollen by organic solvent and mating film's surfaces are solidly adhered at a time of bag-making. So, troubles like peeling of sealed portion when used is hardly occurred.

In order to make the strength of solvent sealing of the film of the invention be within the above range, resin composition is principally adjusted in accordance with the description of the present invention. More specifically, examples of adjusting method include a method by adjusting copolymerization ratio of D-lactic acid and L-lactic acid of PLA composing the (II) layer to lower the crystallinity, or by providing adhesive layers for inhibiting deterioration of sealing strength caused by interlayer peeling.

<Production method of the film of the present invention>

The film of the present invention can be produced by the known method. Mode of the film may be flat-type or tube-type; in view of productivity (possibility to take several cut-films as film products in the original film about the width direction) and feasibility of printing on the inner surface, flat-type is preferable. As a production method of flat-type film, for instance, resins are firstly melted by use of a plurality of extruders, and the melted resins are co-extruded from T-dies. The co-extruded material is cooled and become solidified by using chilled roll, then it is elongated with roll in the longitudinal direction and with tentering in the crosswise direction, annealed, cooled, and finally wound by a winder (if the film surface is to be printed, the surface is treated by corona discharge treatment before wound) to form a roll of heat-shrinkable film having a predetermined length (usually, the length is 1000 m or more, preferably 2000 mm or more, further preferably 3000 m or more. Hereinafter, refer to the length.) so as to obtain the film of the invention. Further, another method in which a flat-type film obtained by opening up a film produced by tubular film process is wound in a form of roll having a film of predetermined length can be applicable.

For the applications such as heat-shrinkable label and the like to shrink the film mainly in one direction, elongation magnification about the direction equivalent to the main shrinking direction is selected to be preferably twice or more and 10 times or less, more preferably 4 times or more and 8 times or less; and elongation magnification about the direction orthogonal to the main shrinking direction is selected to be preferably same size or more and twice or less (same size means a film which is not elongated.), more preferably 1.1 times or more and 1.5 times or less. Substantially, a certain magnification within the range of uniaxial elongation is desirably selected. In a film of biaxial elongation elongated within the above elongation magnification, heat shrinkage ratio thereof about the direction perpendicular to the main shrinking direction does not become too large. For example, when the film is used as heat-shrinkable label, it is possible to inhibit the so-called "longitudinal sink mark" phenomenon wherein the film is thermally shrunk even in the container height direction when fitted to the bottle. Thus, such a film is preferable.

Elongation temperature has to be changed depending on the properties required for glass transition temperature and heat-shrinkable film of the resin to be used. It is about 50 °C or more, preferably 60 °C or more; and the upper limit is controlled within the range of 130 °C or less, and preferably 110 °C or less. Moreover, depending on properties of the resin to be used, elongation method, elongation temperature, shape of objective product, and so on, the elongation magnification is appropriately determined about the main shrinking direction within the range of 1.5 times or more and 10 times or less, preferably 3 times or more and 7 times or less, further preferably 3 times or more and 5 times or less of the uniaxial or biaxial elongation. In addition, for the purpose of improving mechanical properties of the film in a case of uniaxial elongation in the crosswise direction, it is effective to give weak elongation of about 1.05 times or more and 1. 8 times or less into the longitudinal direction. Further, for the purpose of decrease of natural shrinkage ratio, improvement of heat-shrinkage property, and so on, the elongated film, as required, is treated by thermal-treatment and relaxation treatment at a temperature between about 50 °C and 100 °C; then, the film is quickly cooled before the molecular orientation is loosening up, so as to obtain the heat-shrinkable laminated film.

Still further, to the film of the invention, as required, surface treatment and surface working such as corona discharge treatment, printing, coating, and evaporation coating can be given; still further, bag-making and perforation working by various solvent or heat-sealing may also be given.

In the film of the invention, to one layer or more layers of any one of layers, other than the above-described components, within the range which does not undermine the effect of the present invention, for the purpose of improving and adjusting the various physicality like formability, productivity, and heat-shrinkable film, recyclable resin obtained from trimming loss like ends of films and the like; inorganic particles such as silica, talc, kaolin, calcium carbonate; pigment such as titanium oxide and carbon black; additives such as flame retardant, weatherability stabilizer, heat-resistance stabilizer, antistatic additive, melting viscosity improver, cross-linker, lubricant, nucleating agent, plasticizer, and anti-aging agent, may be adequately added.

The film of the invention is shaped from a flat shape into a cylindrical shape and so on around the object to be covered by the film for packaging. In case where the container is a cylindrical shape like PET bottle and printing is required thereon, necessary images are printed on the entire surface of the flat film of wide-width being wound by a roll; then, the printed film is cut into films having required width and is folded so as to make the printed surface become inner surface of the film. Finally center seal (shape of seal portion is the so-called "envelop seams") is provided to complete the cylindrical shape.

As a method of center sealing, there may be a method of adhesive bonding by organic solvent, a method by heat sealing, a method by adhesive, and a method by impulse sealer. Among them, from the view point of productivity and pleasing appearance, a method of adhesive bonding by organic solvent is suitably used.

[Molded product, heat-shrinkable label, and container]

Since the film of the invention exhibits excellent shrinkage property at low temperature, shrink finishing quality, transparency, natural shrinkage and so on, its usage is not particularly limited. As required, by forming printed layer, deposited layer and other functional layers, the film can be used as various molded products such as bottles (blown bottles), trays, lunch boxes, containers for food of delicatessen, containers for dairy products. Especially, when the film of the invention is used as heat-shrinkable labels for food containers (for instance, PET bottles for soft drinks or food, glass bottles, preferably PET bottles), the film is capable of tightly adhering to the complex shapes (e.g., cylindrical column, quadrangular prism, pentagonal prism, and hexagonal column respectively having corners, etc.), thus containers which is fitted with labels of pleasing appearance can be obtained without having wrinkles and pocks. The molded products and containers of the invention can be produced by using normal molding method.

The film of the invention exhibits excellent shrinkage property at low temperature and shrink finishing quality. So, it is used as heat-shrinkable label material for plastic molded products being deformed by heating at high temperatures, but also it is used as heat-shrinkable label material for packaging (containers) using materials as constituent thereof, whose thermal expansion rate and water absorption rate are extremely different from that of the heat-shrinkable film of the invention, for example at least one kind of material selected from a group consisting of: metal, porcelain, glass, paper, polyolefin series resin such as polyethylene, polypropylene, and polybutene; polymethacrylate series resin; polycarbonate series resin; polyester series resin such as polyethylene terephthalate and polybutylene terephthalate; and polyamide series resin, are used as the constituting materials.

Examples of materials composing plastic packaging, to which the film of the invention can be applicable, include not only the above resins, but also polystyrene, rubber modified impact high-intensity polystyrene (HIPS), styrene-butyl acrylate copolymer, styrene-acrylonitrile copolymer, styrene-maleic anhydride copolymer, acrylonitrile-butadiene-styrene copolymer (ABS), (meth) acrylic acid-butadiene-styrene copolymer (MBS), polyvinyl chloride series resin, phenol resin, urea resin, melamine resin, epoxy resin, unsaturated polyester resin, and silicone resin. These plastic packaging may be made from a mixture of two or more kinds of resins or lamination thereof.

Examples

<Examples 1-5, Comparative examples 1-5>

Hereinafter, the invention will be more specifically described by way of the Examples. Measurement values and evaluation criteria thereof shown in the Examples were carried out as follows. In the Examples, drawing (flow) direction of the laminated film is described as "longitudinal (length) " direction, and the orthogonal direction is described as "crosswise (width)" direction.

(Storage elastic modulus (E'))

An obtained film was cut into pieces each having a presice size of 4 mm in width x 60 mm in length to make test pieces; the respective test pieces were measured about dynamic viscoelasticity in the longitudinal direction by using viscoelastic spectrometer DVA-200 (produced by IT Measurement Co., Ltd.) under the condition of vibrational frequency at 10 Hz, strain at 0.1%, and rate of temperature rise at 2 °C/min, inter-chuck distance of 2.5 cm, measurement temperature from -150°C to 150°C. As a storage elastic modulus (E'), storage elastic modulus (E') at 80 °C is shown in Table 2.

(Crosswise shrinkage ratio)

An obtained heat-shrinkable film was cut into pieces each having a size of 100 mm in length x 10 mm in width; the test pieces were respectively dipped into hot water at 80 °C for 10 seconds and shrunk amount was measured. Heat shrinkage ratio about the crosswise direction as a ratio of shrunk amount to the original dimension before shrinkage is shown in % value.

(Longitudinal shrinkage ratio)

An obtained heat-shrinkable film was cut into pieces each having a size of 100 mm in length x 10 mm in width; the test pieces were respectively dipped into hot water at 100 °C for 10 seconds and shrunk amount was measured. Heat shrinkage ratio about the longitudinal direction as a ratio of shrunk amount to the original dimension before shrinkage is shown in % value.

(Natural shrinkage ratio)

An obtained heat-shrinkable film was cut into pieces each having a size of 50 mm in length x 1,000 mm in width; and left them in thermostatic bath under an atmosphere at 30°C for 30 days. About the main shrinking direction, shrunk amount to the original dimension before shrinkage was measured. The ratio is shown in % value.

(Haze value)

Haze value of the film was measured about a film of 40 μm in thickness in accordance with JIS K7105.

(Shrink finishing quality)

A film, on the surface of which grid network with 10 mm interval is printed, was cut into a size of 100 mm in length x 298 mm in width. Portions of 10 mm in width from both ends of the film in the crosswise direction were overlapped each other; then, these were adhered by tetrahydrofuran (THF) solvent so as to produce a cylindrical film. The cylindrical film was fitted around a cylindrical PET bottle whose capacity is 1.5 L; and it was come through the steam-heating type shrinking tunnel (3.2 m long having 3 zones) within about 4 seconds without rotation. The atmospheric temperature in each zone of the tunnel was set within the range from 80 °C to 95 °C by adjusting the steam flow with flow control valve. After film coverage, shrink finishing quality was evaluated in line with the following criteria.

◎: No wrinkle, pock, strain of the grid network, and longitudinal sink mark is produced;
O: wrinkles, pocks and strains of the grid network are slightly produced, but no longitudinal sink mark is produced; and
×: wrinkles, pocks, and distortions of the grid network are remarkably produced; in addition, longitudinal sink mark is also produced.

Raw materials used in the Examples and Comparative examples are as follows.

(Polylactic acid series resin)

S-1 : polylactic acid, Nature Works 4060D, manufactured by Nature Works LLC;
S-2: polylactic acid, Nature Works 4050D, manufactured by Nature Works LLC; and
S-3: acrylic-silicone composite rubber, METABLEN S2001, manufactured by Mitsubishi Rayon Co., Ltd.

(Olefin series resin)

M-1: PP, Wintec WFX6 (MFR 3.0, Tm: 132 °C) manufactured by Japan polypropylene Corporation;
M-2: EVA, Novatec EVA LV430 (MFR 1.0, Tm: 89 °C) manufactured by Japan polyethylene Corporation;
M-3: LLDPE, Kernel KF271 (MFR 1.0, Tm: 102 °C) manufactured by Japan polyethylene Corporation;
M-4: LLDPE, Kernel KS240T (MFR 1.0, Tm: 60 °C) manufactured by Japan polyethylene Corporation; and
M-5: hydrogenerated petroleum resin, Alcon P140 (softening point: 90 °C) manufactured by Arakawa Chemical Industries, Ltd.

(Adhesive layer resin)

AD-1: modified PO, ADMER SE8 00, manufactured by Mitsui Chemicals, Inc.; and
AD-2: EVA, EVAFLEX EV45LX, manufactured by Du Pont-Mitsui Polychemicals Co., Ltd.

(Examples 1-5, Comparative examples 1-5)

As shown in Table 1, each material was fed into a biaxial extruders produced by Toshiba Machine Co., Ltd. and the respective materials were melt-mixed at the set temperature 200°C; after that, co-extrusion through T-dies of mono-layer, three-layer two-kind, or five-layer three-kind dies was conducted, the laminated film was taken-over by castroll set at 50°C, cooled and solidified so as to obtain a non-elongated laminated sheet of 300 mm in width and 200 $\mu$m in thickness. Then, by use of film tentering machine produced by KYOTO MACHINERY CO., LTD., the laminated film was elongated to 5.0 times in crosswise uniaxial direction at preheat temperature of 80 °C, elongation temperature of 73 °C. Later, thermal treatment was carried out at 80 °C to obtain a heat-shrinkable film. Thereafter, slit was made at the end portion of the obtained heat-shrinkable film, the film was wound over 1000 m. Thickness of the obtained heat-shrinkable film was 40 $\mu$m.

Comprehensive evaluation was carried out based on the following criteria: a film, all of which evaluation items were evaluated as ⊚, is determined to be ⊚ (excellent); a film containing evaluation level of O is O (good); a film which contains at least one evaluation level of × is × (bad). The evaluated results are shown in Table 2.

(Table 1)

(Table 1)

| Layer composition | | Example 1 | Example 2 | Example 3 | Example 4 | Example 5 | Comparative example 1 | Comparative example 2 | Comparative example 3 | Comparative example 4 | Comparative examples 5 |
|---|---|---|---|---|---|---|---|---|---|---|---|
| (II) layer | S-1 (mass %) | 100 | 50 | 90 | 50 | 50 | 100 | - | 50 | 100 | - |
| | S-2 (mass %) | - | 50 | - | 40 | 40 | - | - | 50 | - | - |
| | S-3 (mass %) | - | - | 10 | 10 | 10 | - | - | - | - | - |
| | M-2 (mass %) | - | - | - | - | - | - | - | - | - | 100 |
| (I) layer | M-1 (mass %) | 50 | 30 | 35 | - | 90 | - | 50 | - | - | - |
| | M-2 (mass %) | - | 70 | - | - | - | - | - | 100 | - | - |
| | M-3 (mass %) | 50 | - | 50 | 90 | - | - | 50 | - | - | - |
| | M-4 (mass %) | - | - | - | - | - | - | - | - | 100 | - |
| | M-5 (mass %) | - | - | 15 | - | 10 | - | - | - | - | - |
| | S-1 (mass %) | - | - | - | 10 | - | - | - | - | - | 100 |

(continued)

| Layer composition | | Example 1 | Example 2 | Example 3 | Example 4 | Example 5 | Comparative example 1 | Comparative example 2 | Comparative example 3 | Comparative example 4 | Comparative examples 5 |
|---|---|---|---|---|---|---|---|---|---|---|---|
| Adhesive layer | AD-1 (mass %) | - | - | 100 | - | - | - | - | - | - | - |
| | AD-2 (mass %) | - | - | - | 100 | 100 | - | - | - | - | - |
| Lamination ratio of non-elongated sheet (μm) | | (II) layer/ (I) layer/ (II) layer = 30/140/30 | | (II) layer/adhesive layer/(I) layer/ adhesive layer/ (II) layer = 30/10/120/10/30 | | | monolayer | | (II) layerl(I) layer/(II) layer = 30/140/30 | | |

EP 2 036 718 A1

24

(Table 2)

| Evaluation items | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|
| Storage elastic modulus E' (MPa) | 140 | 66 | 96 | 42 | 234 | 3 | 224 | 6 | 1 | 21 |
| Shrinkage ratio about crosswise direction (%) | 39 | 65 | 67 | 53 | 22 | 80 | 24 | 71 | 80 | 50 |
| Shrinkage ratio about longitudinal direction (%) | 4 | 5 | 2 | 3 | 4 | -4 | 4 | 30 | 6 | 3 |
| Natural shrinkage ratio (%) | 0.7 | 0.6 | 0.5 | 0.4 | 1.7 | 0.3 | 14 | 0.4 | 0.4 | 0.5 |
| Haze value (%) | 2.8 | 3.1 | 3.5 | 6.3 | 23.6 | 1.9 | 2.3 | 2.1 | 2.3 | 3.1 |
| Shrink finishing quality | ◎ | ◎ | ◎ | ◎ | ◎ | × | bag-making was impossible | × | × | bag-making was impossible |
| Comprehensive evaluation | ◎ | ◎ | ◎ | ◎ | ◎ | × | × | × | × | × |

According to Table 1, the laminated film of the Examples composed within the range of the present invention exhibits superior shrink finishing quality, shrinkage property at low temperature, and natural shrinkage to those of the Comparative examples.

Whereas, in case of the mono-layer film of polylactic acid series resin (Comparative example 1), crosswise shrinkage ratio (at 80 °C) shows extremely high value; thus, it shows a result in poor shrink finishing quality. In addition, in case where the (II) layer does not include a polylactic acid series resin layer (Comparative example 2), shrinkage property and natural shrinkage were poor. Moreover, when the (I) layer was composed by a polyolefin series resin, whose melting point (Tm) is 80 °C or less and whose storage elastic modulus (E') at 80 °C is below 10 MPa (Comparative examples 3 and 4), shrink finishing quality was poor and longitudinal sink marks were caused. Further, when the (II) layer adopted a polyolefin series resin (Comparative example 5), solvent sealability was bad; bag-making could not be carried out.

Accordingly, it is understood that the film of the present invention is a heat-shrinkable laminated film which exhibits excellent shrink finishing quality, shrinkage property at low temperature, and small natural shrinkage, and is applicable for shrinkable packing, shrinkable banding packing, heat-shrinkable label, and so on.

<Examples 6-9, Comparative examples 6-10, Reference examples 1>

Hereinafter, the invention will be more specifically described by way of the Examples. In the Examples, drawing (flow) direction of the laminated film is described as "MD (Machine Direction)", and the orthogonal direction is described as "TD (Transverse Direction)".

(Heat shrinkage ratio)

A film was cut into pieces each having a size of 100 mm about MD x 100 mm about TD, and the pieces were respectively dipped in hot-water baths at temperatures of 60 °C, 70 °C, 80 °C, and 90 °C for 10 seconds, then the shrinkage amount was measured. The heat shrinkage ratio about TD was measured at temperatures of 70 °C and 80 °C and heat shrinkage ratio about MD was measured at temperatures of 60 °C and 90 °C. A ratio of shrunk amount to the original dimension before shrinkage is shown in % value based on the following expression.

```
(Heat shrinkage ratio (%)) =

{(dimension before shrinkage) - (shrunk dimension))} x 100

/(dimension before shrinkage)
```

(Elongation modulus)

Elongation modulus was measured about No. 1 type test piece (reed-shape having the size of 200 mm in total length and 10 to 25 mm in width, distance between marked lines: 100 mm, inter-chuck distance: 150 mm) about the direction (MD) perpendicular to the film's main shrinking direction at 23°C in accordance with JIS K7127.

(Tensile rupture elongation at low-temperature)

In accordance with JIS K7127, tensile rupture elongation at low-temperature was measured about No. 1 type test piece about the direction orthogonal to the film's main shrinking direction (MD) under a condition of temperature at 0 °C and test rate at 100 mm/min.

(Haze value)

Haze value of the film of 40 $\mu$m in thickness was measured in accordance with JIS K7105.

(Shrink finishing quality)

A film, on the surface of which grid network with 10 mm interval is printed, was cut into a size of 100 mm about MD x 298 mm about TD. Portions of 10 mm in width from both ends of the film in the crosswise direction were overlapped each other; then, these were adhered by tetrahydrofuran (THF) solvent so as to produce a cylindrical film. The cylindrical film was fitted around a cylindrical PET bottle whose capacity was 1.5 L; and it was come through the steam-heating type shrinking tunnel (3.2 m long having 3 zones) within about 4 seconds without rotation. The atmospheric temperature in each zone of the tunnel was set within the range from 70 °C to 85 °C by adjusting the steam flow with flow control valve. Shrunk film was evaluated based on the following criteria.

◎: shrinkage is sufficient, and no wrinkle, pock, strain of the grid network, and longitudinal sink mark is produced;

O: shrinkage is sufficient, only slight wrinkles, pocks, strains of the grid network can be seen;

×: although shrinkage is sufficient, wrinkles, pocks, and strain of the grid network are significantly cansed.

(Example 6)

As shown in Table 3, as a resin for forming the (II) layer, a mixed resin including: 50 mass % of polylactic acid resin, commodity name "Nature Works NW4060D" (L-body/D-body = 88/12) (hereinafter, abbreviated as "PLA1".) manufactured by Nature Works LLC; 40 mass % of polylactic acid series resin, commodity name "Nature Works NW4050D" (L-body/D-body = 95/5) (hereinafter, abbreviated as "PLA2".) manufactured by Nature Works LLC; and 10 mass % of rubber having silicone-acrylic core-shell structure, commodity name "METABLEN S2001" (hereinafter, abbreviated as "silicone rubber".) manufactured by Mitsubishi Rayon Co., Ltd. was used. Also, as a resin for forming the (I) layer, a mixed resin including: 85 mass % of ethylene-vinyl acetate resin, commodity name "Novatec EVA LV392" (content ratio of vinyl acetate monomer unit: 10 mass %, MFR: 2.0 g/10 min) (hereinafter, abbreviated as "EVA1".) manufactured by Japan Polyethylene Corporation; and 15 mass % of polypropylene resin, commodity name "Noblen FH3315" (hereinafter, abbreviated as "PP".) manufactured by Sumitomo Chemical Co., Ltd was used. Each resin was respectively fed into individual uniaxial extruders produced by MITSUBISHI HEAVY INDUSTRIES,LTD., these materials were melt-mixed at the set temperature of 200°C; after that, co-extrusion by three-layer two-kind dies was conducted so as the film thickness of each layer to be: (II) layer/ (I) layer/ (II) layer = 40 μm/170 μm/40 μm. The laminated filmwas taken-over by castroll set at 50°C, cooled and solidified so as to obtain a non-elongated laminated sheet of 300 mm in width and 250 μm in thickness. Then, by use of film tentering machine produced by KYOTO MACHINERY CO., LTD., the laminated film was elongated to 5.0 times in crosswise uniaxial direction at preheat temperature of 80 °C, elongation temperature of 75 °C. Later, thermal treatment was carried out at 80 °C to obtain a heat-shrinkable film. Thereafter, slit was made at the end portion of the obtained heat-shrinkable film; the film was wound over 1000 m. Thickness of the obtained heat-shrinkable film was 40 μm. Comprehensive evaluation was carried out based on the following criteria: a film, all of which evaluation items were evaluated as ◎, is determined to be ◎ (excellent); a film containing evaluation level of O is O (good); a film which contains at least one evaluation level of × is × (bad). The evaluated result is shown in Table 4.

(Example 7)

As shown in Table 3, except for changing the resin for forming the (II) layer to a mixed resin including: 70 mass % of PLA1; 20 mass % of PLA2; and 10 mass % of silicone rubber, and changing the resin for forming the (I) layer to a mixed resin including: 70 mass % of ethylene-vinyl acetate resin (commodity name: "Novatec EVA LV430" (content ratio of vinyl acetate monomer unit: 15 mass %, MFR: 1.0 g/10 min) (hereinafter, abbreviated as "EVA2".) manufactured by Japan polyethylene Corporation and 30 mass % of PP, Example 7 was carried out in the same manner as Example 6 and a heat-shrinkable laminated film was obtained. The evaluation results of the obtained film are shown in Table 4.

(Example 8)

As shown in Table 3, as a resin for forming the (II) layer, a mixed resin including: 50 mass % of PLA1; 30 mass % of PLA2; and 20mass % of silicone rubber was used, and as a resin for forming the (I) layer, a mixed resin including: 40 mass % of polyethylene-vinyl acetate resin, commodity name "EVAFLEX EV360" (content ratio of vinyl acetate monomer unit: 25 mass %, MFR: 2.0 g/10 min) (hereinafter, abbreviated as "EVA3".) manufactured by Du Pont-Mitsui Polychemicals Co., Ltd.; and 60 mass % of PP was used. Further, as a resin for forming the (III) layer, styrene series thermoplastic resin, commodity name "HYBRAR 7125" (content ratio of styrene: 20 mass %) (hereinafter, abbreviated as "TPS".) manufactured by KURARAY Co., Ltd. was introduced. Each resin was respectively fed into individual uniaxial extruders produced by MITSUBISHI HEAVY INDUSTRIES,LTD., these materials were melt-mixed at the set temperature of 200°C; after that, co-extrusion by five-layer three-kind dies was conducted so as the film thickness of each layer to be: (II) layer/ (III) layer/ (I) layer/ (III) layer/ (II) layer = 40 μm/10 μm/150 μm/10 μm/40 μm. The laminated film was taken-over by castroll set at 50°C, cooled and solidified so as to obtain a non-elongated laminated sheet of 300 mm in width and 250 μm in thickness. Then, by use of film tentering machine produced by KYOTO MACHINERY CO., LTD. , the laminated film was elongated to 5.0 times in crosswise uniaxial direction at preheat temperature of 80 °C, elongation temperature of 75 °C. Later, thermal treatment was carried out at 80 °C to obtain a heat-shrinkable film. Thereafter, slit was made at the end portion of the obtained heat-shrinkable film; the film was wound over 1000 m. Thickness of the obtained heat-shrinkable film was 40 μm. The evaluation results of the obtained film are shown in Table 4.

(Example 9)

As shown in Table 3, except for changing the resin for forming the (II) layer to a mixed resin including: 45 mass % of PLA1; 40 mass % of PLA2; and 15 mass % of silicone rubber, and changing the resin for forming the (I) layer to a mixed resin including: 60 mass % of EVA1; 40 mass % of PP; and 20 parts by mass of PLA1 to 100 parts by mass of the above mixed resin including the above EVA1 and PP, Example 9 was carried out in the same manner as Example 8 and a heat-shrinkable laminated film was obtained. The evaluation results of the obtained film are shown in Table 4.

(Comparative example 6)

As shown in Table 3, except for changing the resin for forming the (II) layer to a mixed resin including: 90 mass % of PLA1; and 10 mass % of silicone rubber, changing the resin for forming the (I) layer to PLA1 only, and changing the thickness of each layer to be (II) layer/ (I) layer/ (II) layer = 40 μm/120 μm/40 μm for co-extrusion by three-layer two-kind dies, Comparative example 6 was carried out in the same manner as Example 6 and a heat-shrinkable laminated film was obtained. The evaluation results of the obtained film are shown in Table 4.

(Comparative example 7)

As shown in Table 3, except for changing the resin for forming the (II) layer to 100 mass % of ethylene-vinyl acetate copolymer, commodity name "NUC-8420" (manufactured by Nippon Unicar Company Limited, content ratio of vinyl acetate monomer unit: 15 mass %) (hereinafter, abbreviated as "EVA5".) and changing the resin for forming the (I) layer to 100 mass % of PLA1, Comparative example 7 was carried out in the same manner as Example 6 and a heat-shrinkable laminated film was obtained. The evaluation results of the obtained film are shown in Table 4.

(Comparative example 8)

As shown in Table 3, except for changing the resin for forming the (II) layer to a mixed resin including: 70mass % of PLA1, 20 mass % of PLA2, and 10mass % of silicone rubber, and changing the resin for forming the (I) layer to 100mass % of polyethylene resin, commodity name "Kernel KS290T" (MFR: 2.2 g/10 min, melting point: 60 °C, density: 0.880 g/cm$^3$) (hereinafter, abbreviated as "PE".) manufactured by Japan Polyethylene Corporation, Comparative example 8 was carried out in the same manner as Example 6 and a heat-shrinkable laminated film was obtained. The evaluation results of the obtained film are shown in Table 4.

(Reference Example 1)

As shown in Table 3, except for changing the resin for forming the (II) layer to a mixed resin including: 50 mass % of PLA1; 40 mass % of PLA2; and 10 mass % of silicone rubber, and changing the resin for forming the (I) layer to 100 mass % of EVA2, Reference example 1 was carried out in the same manner as Example 6 and a heat-shrinkable laminated film was obtained. The evaluation results of the obtained film are shown in Table 4.

(Comparative example 9)

As shown in Table 3, except for changing the resin for forming the (II) layer to a mixed resin including: 70 mass % of PLA1; 20 mass % of PLA2; and 10 mass % of silicone rubber, and changing the resin for forming the (I) layer to a resin containing 100 mass % of PE and 20 parts by mass of PLA1 to 100 parts by mass of the above PE, Comparative example 9 was carried out in the same manner as Example 8 and a heat-shrinkable laminated film was obtained. The evaluation results of the obtained film are shown in Table 4.

(Comparative example 10)

As shown in Table 3, except for changing the resin for forming the (II) layer to a mixed resin including: 50 mass % of PLA1; 40 mass % of PLA2; and 10 mass % of silicone rubber, and changing the resin for forming the (I) layer to a mixed resin including: 80 mass % of polyethylene-vinyl acetate resin, commodity name "EVAFLEX EV45LX" (content ratio of vinyl acetate monomer unit: 46 mass %, MFR: 2.5 g/10 min) (hereinafter, abbreviated as "EVA4".) manufactured by Du Pont-Mitsui Polychemicals Co., Ltd. and 20 mass % of PP, Comparative example 10 was carried out in the same manner as Example 8 and a heat-shrinkable laminated film was obtained. The evaluation results of the obtained film are shown in Table 4.

(Table 3)

(Table 3)

| | | | Examples | | | Comparative examples | | | Reference example | Comparative examples | |
|---|---|---|---|---|---|---|---|---|---|---|---|
| | | | 6 | 7 | 8 | 9 | 6 | 7 | 8 | 1 | 9 | 10 |
| (II) layer (mass %) | | PLA1 | 50 | 70 | 50 | 45 | 90 | | 70 | 50 | 70 | 50 |
| | | PLA2 | 40 | 20 | 30 | 40 | | | 20 | 40 | 20 | 40 |
| | | silicone rubber | 10 | 10 | 20 | 15 | 10 | | 10 | 10 | 10 | 10 |
| | | EVA5 | | | | | | 100 | | | | |
| (III) layer (mass %) | | TPS | | | 100 | 100 | | | | | 100 | 100 |
| (I) layer | (mass %) | EVA1 | 85 | | | 60 | | | | | | |
| | | EVA2 | | 70 | | | | | | 100 | | |
| | | EVA3 | | | 40 | | | | | | | |
| | | EVA4 | | | | | | | | | | 80 |
| | | PP | 15 | 30 | 60 | 40 | | | | | | 20 |
| | | PE | | | | | | | 100 | | 100 | |
| | (mass %) | PLA1 | | | | 20 | 100 | 100 | | | 20 | |

(Table 4)

(Table 4)

| | | Examples | | | | Comparative examples | | | Reference example | Comparative examples | |
|---|---|---|---|---|---|---|---|---|---|---|---|
| | | 6 | 7 | 8 | 9 | 6 | 7 | 8 | 1 | 9 | 10 |
| Storage elastic modulus E' (MPa) | | 32 | 66 | 110 | 45 | 3 | 35 | 1 | 21 | 3 | 3 |
| Heat shrinkage ratio (%) about TD | 80°C | 53 | 46 | 29 | 49 | 69 | 36 | 76 | 55 | 72 | 74 |
| Heat shrinkage ratio (%) about MD | 60°C | 1.0 | 1.5 | 2.5 | 1.0 | 5.8 | 5.4 | -11.3 | 1.3 | -10.7 | -13.3 |
| | 70°C | 1.6 | 2.8 | 3.8 | 2.0 | 8.7 | 6.7 | -6.3 | 2.3 | -5.3 | -7.3 |
| | 80°C | 2.8 | 3.3 | 4.5 | 2.2 | 8.3 | 7.8 | -4.5 | 3.0 | -6.3 | -6.4 |
| | 90°C | 4.0 | 4.3 | 4.7 | 3.5 | 10.0 | 26.0 | 0.0 | 17.0 | -1.0 | 0.0 |
| Average heat-shrinkage ratio about MD | | 2.4 | 2.9 | 3.9 | 2.2 | 8.2 | 11.5 | -5.5 | 5.9 | -5.8 | -6.7 |
| Tensile elastic modulus (MPa) | | 1130 | 1280 | 1320 | 1260 | 2510 | 937 | 890 | 960 | 930 | 945 |
| Tensile rupture elongation (%) at Low-temperature | | 480 | 360 | 210 | 490 | 97 | 387 | 367 | 355 | 357 | 460 |
| Haze value (%) | | 3.1 | 3.5 | 4.1 | 9.6 | 7.0 | 4.0 | 3.6 | 4.5 | 12.5 | 4.3 |
| Shrink finishing quality | | O | ◎ | O | ◎ | × | × | × | × | × | × |
| Comprehensive evaluation | | O | ◎ | O | O | × | × | × | × | × | × |

According to Tables 3 and 4, the films of Examples 6 to 9 composed by layers within the scope of the present invention exhibits excellent heat-shrinkage property, transparency, and shrink finishing quality. Whereas, when resin other than the one defined in the (I) layer of the film of the invention was used (Comparative examples 6 and 7), unfavorable shrink finishing quality and longitudinal sink marks are caused; hence, there were problems in shrinkage properties. Moreover, when the resin other than the one defined in the preferable mode of the invention was used for the (I) layer (Comparative example 8 and Reference example 1), unfavorable shrink finishing quality and longitudinal sink marks are caused; hence, similar to Comparative examples 6 and 7, there were problems in shrinkage properties. Further, when recyclable resin was added to the resin other than the one defined in the preferable mode of the invention (Comparative example 9) and used for the (I) layer, shrinkage property and transparency of the film were problematic. As seen above, it is understood that the film of the present invention is a heat-shrinkable film which exhibits excellent heat-shrinkage property, transparency, shrink finishing quality, to which recyclable resin can be added, and which is applicable for the use of shrinkable packing, shrinkable banding packing, and heat-shrinkable label.

<Examples 10-14, Reference examples 2-4>

Hereinafter, the invention will be more specifically described by way of the Examples. In the Examples, drawing (flow) direction of the film is described as "MD (Machine Direction)", and the orthogonal direction is described as "TD (Transverse Direction)".

(Melting point)

With differential scanning calorimeter (DSC) measurement apparatus (Pyris1 DSC (manufactured by Perkin Elmer Inc.)), melting point of the polypropylene series resin used in the invention was determined by measuring melting peak under the condition of temperature range between -40 °C and 200 °C and rate of temperature rise at 10 °C/min.

(Content ratio of propylene monomer unit)

Content ratio of propylene monomer unit contained in the polypropylene series resin used in the invention was determined by NMR.

(Storage elastic modulus)

An obtained film was cut into pieces each having a size of 60 mm in width x 4 mm in length to make test pieces; the respective test pieces were measured about dynamic viscoelasticity about the longitudinal direction by using viscoelastic spectrometer DVA-200 under the condition of vibrational frequency at 10 Hz, strain at 0.1%, and rate of temperature rise at 3 °C/min, inter-chuck distance of 2.5 cm, measurement temperature from -150°C to 150°C. As a storage elastic modulus, storage elastic modulus at 20 °C is shown.

(Heat shrinkage ratio)

An obtained heat-shrinkable film was cut into pieces each having a size of 100 mm in length x 100 mm in width, and the pieces were respectively dipped in hot-water baths at temperatures of 70 °C and 80 °C for 10 seconds, then the shrinkage amount was measured. The heat shrinkage ratios about the longitudinal direction and the crosswise direction are shown in % value of shrunk dimension to original dimension before shrinkage.

(Haze value)

Haze value of the film of 50 $\mu$m in thickness was measured in accordance with JIS K7105.

(Tensile rupture elongation at low-temperature)

In accordance with JIS K7127, tensile rupture elongation at low-temperature was measured.

(Shrink finishing quality)

A film, on the surface of which grid network with 10 mm interval is printed, was cut into a size of 100 mm about MD x 298 mm about TD. Portions of 10 mm in width from both ends of the film in the crosswise direction were overlapped each other; then, these were adhered by tetrahydrofuran (THF) solvent so as to produce a cylindrical film. The cylindrical film was fitted around a cylindrical PET bottle whose capacity was 1.5 L; and it was come through the steam-heating type shrinking tunnel (3.2 m long having 3 zones) within about 4 seconds without rotation. The atmospheric temperature in each zone of the tunnel was set within the range from 70 °C to 85 °C by adjusting the steam flow with flow control valve. Shrunk film was evaluated based on the following criteria.

◎: shrinkage is sufficient, and no wrinkle, pock, strain of the grid network, and longitudinal sink mark is produced;

O: shrinkage is sufficient, wrinkles, pocks, strains of the grid network can be seen in patches;

×: although shrinkage is sufficient, wrinkles, pocks, and strains of the grid network are significantly caused, or shrinkage is insufficient, thereby coverage around the bottle's surface is not sufficient.

(Example 10)

As shown in Table 5, as a resin for forming the (II) layer, a resin composition including: 50 parts by mass of "Nature Works 4060" (manufactured by Nature Works LLC, L-lactic acid/D-lactic acid = 88/12, hereinafter, abbreviated as "PLA1".) and 40 parts by mass of "Nature Works 4050" (manufactured by Nature Works LLC, L-lactic acid/D-lactic acid = 95/5, abbreviated as "PLA2".) as PLA; and 10 parts by mass of "METABLEN S2001" (manufactured by Mitsubishi Rayon Co. , Ltd. , rubber of silicone-acrylic core-shell structure, hereinafter, abbreviated as "rubber component 1".) as an elastic component, was used. Also, as a polypropylene series resin for forming the (I) layer, "WINTEC WFX6" (manufactured by Japan Polypropylene Corporation, melting point: 125 °C, PP content ratio: 97.6 mass %, hereinafter, abbreviated as "PP1".) was used.

Each resin was respectively fed into individual uniaxial extruders produced by MITSUBISHI HEAVY INDUSTRIES, LTD. , these materials were melt-mixed at the set temperature of 220°C; after that, co-extrusion by three-layer two-kind dies was conducted so as the film thickness of each layer to be: (II) layer/(I) layer/ (II) layer = 30 $\mu$m/190 $\mu$m/ 30 $\mu$m. The laminated film was taken-over by castroll set at 50°C, cooled and solidified so as to obtain a non-elongated laminated sheet of 220 mm in width and 250 $\mu$m in thickness. Then, by use of film tentering machine produced by KYOTO MACHINERY CO., LTD., the laminated film was elongated to 5.0 times in crosswise uniaxial direction at preheat temperature of 70 °C, elongation temperature of 65 °C. Later, thermal treatment and the following quench by cold blast of air were carried out at 65 °C to obtain a heat-shrinkable film. Thereafter, slit was made at the end portion of the obtained heat-shrinkable film; the film was wound over 1000 m. Thickness of the obtained heat-shrinkable film was 50 $\mu$m. The evaluation results of the obtained film are shown in Table 5.

(Example 11)

As shown in Table 5, except for changing resin for forming the (II) layer to a mixed resin including: 45 parts by mass of PLA1 and 45 parts by mass of PLA2 as PLA; and 10 parts by mass of rubber component 1 as the elastic component, as well as changing polypropylene series resin for forming the (I) layer to "Versify 2300" (manufactured by The Dow Chemical Company, melting point: 93 °C, PP Content ratio: 90 mass %, hereinafter, abbreviated as "PP2".), and changing the temperature of each step, i.e. , preheat temperature of film tentering machine to 80 °C, elongation temperature to 75 °C, and thermal-treatment temperature to 80 °C, Example 11 was carried out in the same manner as Example 10 and a heat-shrinkable laminated film was obtained. The evaluation results of the obtained film are shown in Table 5.

(Example 12)

As shown in Table 5, except for changing resin for forming the (II) layer to a mixed resin including: 54 parts by mass of PLA1 and 36 parts by mass of PLA2 as PLA; and 10 parts by mass of rubber component 1 as the elastic component, and changing the resin for forming the (I) layer to the mixed resin including 80 parts by mass of PP1 and 20 parts by mass of PLA1, Example 12 was carried out in the same manner as Example 10 and a heat-shrinkable laminated film was obtained. The evaluation results of the obtained film are shown in Table 5.

(Example 13)

As shown in Table 5, as a resin for forming the (II) layer, a mixed resin including: 50 parts by mass of PLA1; 40 parts by mass of PLA2; and 10 parts by mass of rubber component 1 as the elastic component, was used. As a resin for forming the (I) layer, a resin including: 80 parts by mass of PP1 and 20 parts by mass of PLA1 was used; moreover, as a resin for forming the (III) layer, a styrene series thermoplastic resin, commodity name "HYBRAR 7125" (styrene content ratio: 20 mass %, hereinafter, abbreviated as "TPS".) manufactured by KURARAY Co., Ltd. was introduced. Each resin was respectively fed into individual uniaxial extruders produced by MITSUBISHI HEAVY INDUSTRIES, LTD., these materials were melt-mixed at the set temperature of 200°C; after that, co-extrusion by five-layer three-kind dies was conducted so as the film thickness of each layer to be: (II) layer/ (III) layer/ (I) layer/ (III) layer/ (II) layer = 30 μm/5 μm/180 μm/5 μm/30 μm. The laminated film was taken-over by castroll set at 50°C, cooled and solidified so as to obtain a non-elongated laminated sheet of 220 mm in width and 250 μm in thickness. Then, by use of film tentering machine produced by KYOTO MACHINERY CO. , LTD., the laminated film was elongated to 5.0 times in crosswise uniaxial direction at preheat temperature of 70 °C, elongation temperature of 65 °C. Later, thermal treatment was carried out at 65 °C to obtain a heat-shrinkable film. Thereafter, slit was made at the end portion of the obtained heat-shrinkable film; the film was wound over 1000 m. Thickness of the obtained heat-shrinkable film was 50 μm. The results, evaluated in the same manner as Example 10, of the obtained film are shown in Table 5.

(Example 14)

As shown in Table 5, except for changing resin for forming the (I) layer to a mixed resin including: 40 parts by mass of PP1; 40 parts by mass of PP2; and 20 parts by mass of PLA1, Example 14 was carried out in the same manner as Example 13 and a heat-shrinkable laminated film was obtained. The results, evaluated in the same manner as Example 10 of the obtained film are shown in Table 5.

(Reference example 2)

As shown in Table 5, as a resin for forming the (II) layer, a mixed resin including: 50 parts by mass of PLA1; 40 parts by mass of PLA2; and 10 parts by mass of rubber component 1, was used. As a polypropylene series resin for forming the (I) layer, "Noblen FH3315" (manufactured by Sumitomo Chemical Co., Ltd., melting point: 144 °C, PP content rate: 96%, hereinafter, abbreviated as "PP3".) was used. Co-extrusion by three-layer two-kind dies was conducted so as the film thickness of each layer to be: (II) layer/ (I) layer/ (II) layer = 30 μm/190 μm/30 μm. The laminated film was taken-over by castroll set at 50°C, cooled and solidified so as to obtain a non-elongated laminated sheet of 220 mm in width and 250 μm in thickness. Otherwise, Reference example 2 was carried out in the same manner as Example 10 to obtain a heat-shrinkable film. The evaluation results of the film are shown in Table 5.

(Reference example 3)

About PP series resin for forming the (I) layer, except for using a resin composition including: 80 parts by mass of PP3 and 20 parts by mass of PLA1, Reference example 3 was carried out in the same manner as Example 10 to obtain a heat-shrinkable laminated film. The evaluation results of the film are shown in Table 5.

(Reference example 4)

As shown in Table 5, as the resin for forming the (II) layer, a mixed resin including: 50 parts by mass of PLA1; 40 parts by mass of PLA2; and 10 parts by mass of rubber component 1 as the elastic component, was used. As the resin for forming the (I) layer, PP series resin including 80 parts by mass of PP3 and 20 parts by mass of PLA1, was used. Moreover, as the resin for forming the (III) layer, TPS was introduced. Each resin was respectively fed into individual uniaxial extruders produced by MITSUBISHI HEAVY INDUSTRIES,LTD., these materials were melt-mixed at the set temperature 200°C; after that, co-extrusion by five-layer three-kind dies was conducted so as the film thickness of each layer to be: (II) layer/ (III) layer/ (I) layer/(III) layer/ (II) layer = 30 μm/5 μm/180 μm/5 μm/30 μm. The laminated film was taken-over by castroll set at 50°C, cooled and solidified so as to obtain a non-elongated laminated sheet of 220 mm in width and 200 μm in thickness. Otherwise, Reference example 4 was carried out in the same manner as Example 10 to obtain a heat-shrinkable film. The evaluation results of the film are shown in Table 5.

(Table 5)

(Table 5)

| | | Examples | | | | | Reference examples | | |
|---|---|---|---|---|---|---|---|---|---|
| | | 10 | 11 | 12 | 13 | 14 | 2 | 3 | 4 |
| (II) layer (mass %) | PLA1 | 50 | 45 | 54 | 50 | 50 | 50 | 50 | 50 |
| | PLA2 | 40 | 45 | 36 | 40 | 40 | 40 | 40 | 40 |
| | rubber component 1 | 10 | 10 | 10 | 10 | 10 | 10 | 10 | 10 |
| (I) layer (mass %) | PP1 | 100 | | 80 | 80 | 40 | | | |
| | PP2 | | 100 | | | 40 | | | |
| | PP3 | | | | | | 100 | 80 | 80 |
| | PLA1 | | | 20 | 20 | 20 | | 20 | 20 |
| (III) layer (mass %) | AD | | | | 100 | 100 | | | 100 |
| Storage elastic modulus E' (MPa) | | 33 | 21 | 35 | 34 | 29 | 22 | 23 | 22 |
| Heat shrinkage ratio at 70°C (%) | | 28 | 37 | 32 | 32 | 32 | 10 | 12 | 10 |
| Heat shrinkage ratio at 80°C (%) | | 47 | 51 | 50 | 47 | 50 | 12 | 15 | 12 |
| Haze value (%) | | 4.1 | 3.8 | 7.0 | 7.2 | 4.0 | 3.2 | 11.2 | 11.5 |
| Tensile rupture elongation (%) at Low-temperature | | 238 | 360 | 250 | 268 | 282 | 350 | 384 | 391 |
| Shrink finishing quality | | ◎ | ◎ | ◎ | ◎ | ◎ | × | × | × |

The heat-shrinkable films defined by the present invention according to Table 5 show favorable shrinkage property at low temperature, transparency, and shrink finishing quality. Whereas, when PO having high melting point is added to the (I) layer (Reference example 2), the obtained products did not show favorable shrink finishing quality. In addition, when PLA are contained together with PO having high melting point (Reference examples 3 and 4), transparency of the obtained film was poor. Accordingly, the film of the present invention exhibits excellent shrinkage property at low temperature, transparency, and shrink finishing quality, and be able to maintain favorable transparency even in case where recyclable resin is added to the (I) layer.

Industrial Applicability

Since the heat-shrinkable laminated film of the present invention exhibits excellent shrink finishing quality and shrinkage property at low temperature, and inhibits natural shrinkage, it is possible to be used for molded product which requires heat-shrinkage property, particularly for shrinkable label and so on. Moreover, the heat-shrinkable laminated film of the invention can be used for molded product, particularly for shrinkable label and so on which exhibits excellent heat-shrinkage property, transparency, and shrink finishing quality, and in which recyclable resin can be added. Further, the PLA series resin used in the invention is a plant-derived resin so that it promotes use of biomass and realizes recycling society.

**Claims**

1. A heat-shrinkable laminated film having at least three layers comprising: a (I) layer; and two (II) layers respectively disposed on each surface of the (I) layer, storage elastic modulus (E') of the heat-shrinkable laminated film at 80 °C being 10 MPa or more and 1,000 MPa or less when dynamic viscoelasticity about a film's main shrinking direction and a direction orthogonal to the main shrinking direction is measured under a condition of vibrational frequency at 10 Hz, strain at 0.1%.

   (I) layer: a layer containing at least one polyolefin series resin as a main component;
   (II) layer: a layer containing at least one polylactic acid series resin as a main component.

2. The heat-shrinkable laminated film according to claim 1, wherein heat shrinkage ratio about the main shrinking direction is 20% or more when dipped in hot water at 80°C for 10 seconds.

3. The heat-shrinkable laminated film according to claim 1 or 2, wherein the polylactic acid series resin is a copolymer of D-lactic acid and L-lactic acid.

4. The heat-shrinkable laminated film according to claim 3, wherein composition between D-lactic acid and L-lactic acid of the polylactic acid series resin is: D-lactic acid/L-lactic acid = 3/97-15/85 or 85/15-97/3.

5. The heat-shrinkable laminated film according to any one of claims 1 to 4, wherein at least one or more crystal melting peaks exist within the range of 80 °C or more and 160 °C or less when the polyolefin series resin is measured by differential scanning calorimeter (DSC).

6. The heat-shrinkable laminated film according to any one of claims 1 to 5, wherein the polyolefin series resin is a polyethylene series resin, a polypropylene series resin, an ethylene-vinyl acetate copolymer, or a mixture thereof.

7. The heat-shrinkable laminated film according to any one of claims 1 to 5, wherein the polyolefin series resin is a polypropylene series resin whose melting point is 90 °C or more and 130 °C or less and content ratio of the propylene monomer unit is 80 mass % or more and 99 mass % or less.

8. The heat-shrinkable laminated film according to any one of claims 1 to 5, wherein the polyolefin series resin is a polyolefin series resin which contains ethylene-vinyl acetate copolymer as a main component and also contains polypropylene series resin.

9. The heat-shrinkable laminated film according to claim 8, wherein content ratio of vinyl acetate monomer unit in the ethylene-vinyl acetate copolymer is 5 mass % or more and 30 mass % or less.

10. The heat-shrinkable laminated film according to claim 8 or 9, wherein mass ratio between the ethylene-vinyl acetate copolymer and the polypropylene series resin is: ethylene-vinyl acetate copolymer/polypropylene series resin = 40/60-95/5.

11. The heat-shrinkable laminated film according to claim 8 or 9, wherein mass ratio between the ethylene-vinyl acetate copolymer and the polypropylene series resin is: ethylene-vinyl acetate copolymer/polypropylene series resin = 60/40-85/15.

**12.** The heat-shrinkable laminated film according to any one of claims 8 to 11, wherein average of heat shrinkage ratio about the direction orthogonal to the main shrinking direction is within $\pm$ 5% when dipping respectively in hot water at 60 °C and hot water at 90 °C for 10 seconds.

**13.** The heat-shrinkable laminated film according to any one of claims 1 to 12, wherein the (I) layer further contains at least one polylactic acid series resin.

**14.** The heat-shrinkable laminated film according to claim 13, wherein the (I) layer contains 100 parts by mass or less of polylactic acid series resin to 100 parts by mass of polyolefin series resin.

**15.** The heat-shrinkable laminated film according to claim 13, wherein the resin composing the main component of the (I) layer is the polypropylene series resin according to claim 7, and the

(I) layer contains 3 parts by mass or more and 30 parts by mass or less of polylactic acid series resin to 100 parts by mass of the polypropylene series resin.

**16.** The heat-shrinkable laminated film according to any one of claims 1 to 15, wherein a monolayer (III) layer containing at least adhesive resin as a main component is provided between the (I) layer and the (II) layer.

**17.** The heat-shrinkable laminated film according to any one of claims 7 to 16, wherein haze value in accordance with JIS K7105 is 10% or less.

**18.** The heat-shrinkable laminated film according to any one of claims 7 to 17, wherein tensile rupture elongation about the direction orthogonal to the main shrinking direction is 100% or more and 500% or less when measured under a condition of ambient temperature at 0 °C, tensile speed at 100mm/min.

**19.** A molded product employing the heat-shrinkable laminated film according to any one of claims 1 to 18 as a base material.

**20.** A heat-shrinkable label employing the heat-shrinkable laminated film according to any one of claims 1 to 18 as a base material.

**21.** A container, on the outer surface of which the molded product according to claim 19 or the heat-shrinkable label according to claim 20 is fitted.

# Fig. 1

<u>10</u>

- 12a
- 11
- 12b

# Fig. 2

<u>20</u>

- 12a
- 23a
- 11
- 23b
- 12b

## INTERNATIONAL SEARCH REPORT

| | International application No. |
|---|---|
| | PCT/JP2007/063180 |

| A. CLASSIFICATION OF SUBJECT MATTER |
|---|
| *B32B27/32*(2006.01)i, *B29C61/06*(2006.01)i, *B32B27/36*(2006.01)i, *B65D65/40* (2006.01)i, *G09F3/04*(2006.01)i |

According to International Patent Classification (IPC) or to both national classification and IPC

| B. FIELDS SEARCHED |
|---|
| Minimum documentation searched (classification system followed by classification symbols) |
| B32B27/32, B29C61/06, B32B27/36, B65D65/40, G09F3/04 |

Documentation searched other than minimum documentation to the extent that such documents are included in the fields searched

| Jitsuyo Shinan Koho | 1922-1996 | Jitsuyo Shinan Toroku Koho | 1996-2007 |
|---|---|---|---|
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2002-19053 A (Mitsubishi Plastics, Inc.), 22 January, 2002 (22.01.02), Claims 1, 6; Par. Nos. [0005], [0008], [0013], [0014] (Family: none) | 1,3,5,6,16, 17,19-21 |
| Y | JP 2004-345244 A (Mitsubishi Plastics, Inc.), 09 December, 2004 (09.12.04), Claim 3; Par. Nos. [0010], [0023], [0024], [0025] (Family: none) | 1,3,5,6,16, 17,19-21 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 October, 2007 (04.10.07) | 16 October, 2007 (16.10.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| | International application No. |
|---|---|
| | PCT/JP2007/063180 |

C (Continuation).    DOCUMENTS CONSIDERED TO BE RELEVANT

| Category* | Citation of document, with indication, where appropriate, of the relevant passages | Relevant to claim No. |
|---|---|---|
| P,A | JP 2006-218857 A  (Mitsubishi Plastics, Inc.), 24 August, 2006 (24.08.06), Claims; Par. Nos. [0003], [0022], [0048], [0058], [0059], [0076], [0080], [0081], [0082], [0087], [0104], [0105], [0109] & WO 2006/075634 A1 | 2,4,7-12,14, 15,18 |
| P,A | JP 2006-326952 A  (Mitsubishi Plastics, Inc.), 07 December, 2006 (07.12.06), Claims; Par. No. [0091] (Family: none) | 18 |
| A | JP 2000-26623 A  (Asahi Chemical Industry Co., Ltd.), 25 January, 2000 (25.01.00), Claim 11; Par. No. [0058]; example 14 (Family: none) | 1-21 |
| A | JP 2005-14428 A  (Mitsubishi Plastics, Inc.), 20 January, 2005 (20.01.05), Claims (Family: none) | 1-21 |
| A | JP 2002-194112 A  (Mitsubishi Plastics, Inc.), 10 July, 2002 (10.07.02), Claims (Family: none) | 1-21 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003119367 A
- JP 2002019053 A
- JP 2000108202 A
- JP 2004262029 A
- JP 2002347184 A
- JP 2158643 A
- JP 2305814 A
- JP 3072512 A